# EUROPEAN PATENT APPLICATION

(11) **EP 2 923 575 A1**
(43) Date of publication of application: **30.09.2015**
(21) Application number: 15157639.4
(22) Date of filing: 27.04.2010
(51) Int. Cl.: A01N 43/22, A01N 59/16, A01N 59/20, A01N 65/00, A01N 63/02, A01P 7/04

(54) **Pesticide compositions exhibiting enhanced activity**

(30) Priority: 30.04.2009 US 214953 P; 01.10.2009 US 278006 P
(62) Divisional of application: 10716913.8
(71) Applicant: Dow AgroSciences LLC, Indianapolis, IN 46268 (US)
(72) Inventor: Wilson, Stephen Lewis, Zionsville, IN 46077 (US); Liu, Lei, Carmel, IN 46032 (US); Thomas, James D., Fishers, IN 46038 (US); Boucher, Raymond E. Jr, Lebanon, IN 46052 (US); Dripps, James Edwin, Carmel, IN 46032 (US); Kempe, Margaret Sue, Greenfield, IN 46140 (US); Atkinson, John M., Zionsville, IN 46077 (US); Linscott, Douglas J., Pittsboro, IN 46167 (US)
(74) Representative: Beck Greener

(57) **Abstract**

Pest controlling compositions exhibiting enhanced pesticidal activity levels are disclosed. In one embodiment, a composition includes at least one pesticide and at least one metal oxide. In this embodiment, the composition exhibits enhanced pesticidal activity levels compared to a composition dissimilar only in not having the at least one metal oxide. Still, other alternative embodiment pesticide compositions exhibiting enhanced pesticidal activity are disclosed.

## Description

### CROSS REFERENCE TO RELATED APPLICATIONS

The subject application claims priority to U.S. Provisional Application No. 61/214,953 filed April 30, 2009, the contents of which are incorporated herein by reference in their entirety, and to U.S. Provisional Application No. 61/278,006 filed October 1, 2009, the contents of which are also incorporated herein by reference in their entirety.

### FIELD OF THE INVENTION

The invention disclosed in this document is related to the field of pesticides and their use in controlling pests.

### BACKGROUND OF THE INVENTION

Pests cause millions of human deaths around the world each year. Furthermore, there are more than ten thousand species of pests that cause losses in agriculture. These agricultural losses amount to billions of U.S. dollars each year. Termites cause damage to various structures such as homes. These termite damage losses amount to billions of U.S. dollars each year. As a final note, many stored food pests eat and adulterate stored food. These stored food losses amount to billions of U.S. dollars each year, but more importantly, deprive people of needed food.

Many pesticide compositions have been developed over time to destroy pests and alleviate the damages they cause. These compositions are often applied to the environment in which the insects or other pests live or where their eggs are present, including the air surrounding them, the food they eat, or objects which they contact. Several of these compositions are vulnerable to chemical and physical degradation when applied to these environments. If these types of degradation occur, the pesticidal activity of the pesticides can be adversely affected, commonly necessitating an increase in the concentration at which the pesticides are applied and/or more frequent applications of the pesticides. As a result, user costs and the costs to consumers can escalate. Therefore, a need exists for new pesticide compositions that exhibit increased stability and enhanced activity compared to existing pesticide compositions when, for example, the pesticide compositions are applied to an environment to control pests.

### SUMMARY OF THE INVENTION

The present invention concerns novel pesticide compositions and their use in controlling insects and certain other invertebrates. In one embodiment, a composition includes at least one pesticide and at least one metal oxide. In this embodiment, the composition exhibits enhanced pesticidal activity levels compared to a composition dissimilar only in not having the at least one metal oxide. In one form of this embodiment, the at least one pesticide is a photo-labile pesticide. In another form, the at least one pesticide is a macrocyclic lactone insecticide. In yet another more particular form of this embodiment, the at least one pesticide is a spinosyn, such as spinetoram or spinosad, and the at least one metal oxide is a transition metal oxide, such as a zinc oxide, an iron oxide, a titanium oxide, a copper oxide, a manganese oxide and mixtures of these oxides, although other alternatives for the pesticide and the at least one metal oxide are contemplated.

In another more particular embodiment, a composition includes a spinosyn and at least one metal oxide. In this embodiment, the composition exhibits enhanced pesticidal activity levels compared to a composition dissimilar only in not having the at least one metal oxide. In one form of this embodiment, the spinosyn is spinetoram and the at least one metal oxide is a transition metal oxide. In a further form of this embodiment, the composition includes at least about 1% by weight of the spinosyn and from about 2% to about 90% by weight of the metal oxide. However, alternative values for the weight percentages of the spinosyn and the metal oxide are contemplated.

In yet another embodiment, a composition includes at least one pesticide, at least one metal oxide and at least one proteinaceous material. In this embodiment, the composition exhibits enhanced pesticidal activity levels compared to a composition dissimilar only in not having the at least one metal oxide and the at least one proteinaceous material. In one form of this embodiment, the at least one metal oxide is a transition metal oxide and the proteinaceous material includes at least one member selected from the group consisting of bovine serum albumin, egg albumen, whey, gelatin and zein, just to name a few possibilities. In a further aspect of this embodiment, the composition includes at least about 2% by weight of the pesticide, from about 5% to about 75% by weight of the metal oxide and from about 2% to about 80% by weight of the proteinaceous material. It should be appreciated however that alternative values for the weight percentages of the pesticide, metal oxide and proteinaceous material are contemplated.

In another embodiment, a composition includes at least one pesticide, at least one metal oxide and at least one polymeric material. In this embodiment, the composition exhibits enhanced pesticidal activity levels compared to a composition dissimilar only in not having the at least one metal oxide and the at least one polymeric material. In one form of this embodiment, the at least one metal oxide is a transition metal oxide and the polymeric material includes at least one member selected from the group consisting of polyvinyl alcohol, polyvinyl pyrrolidone, a latex and a terpene polymer. In still another form, the polymeric material is polyvinyl alcohol. In one aspect of this embodiment, the composition includes at least about 1% by weight of the at least one pesticide, from about 5% to about 75% by weight of the at least one metal oxide and from about 3% to about 75% by weight of the at least one polymeric material. In another aspect of this embodiment, the composition includes from about 1% to about 40% by weight of the at least one pesticide, from about 5% to about 65% by weight of the at least one metal oxide and from about 0.5% to about 30% by weight of the at least one polymeric material. It should be appreciated however that alternative values for the weight percentages of the at least one pesticide, metal oxide and polymeric material are contemplated.

In still another embodiment, a composition includes at least one pesticide, at least one metal oxide, at least one proteinaceous material and at least one polymeric material. In this embodiment, the composition exhibits enhanced pesticidal activity levels compared to a composition dissimilar only in not having the at least one metal oxide, the at least one proteinaceous material and the at least one polymeric material. In one form of this embodiment, the at least one metal oxide is a transition metal oxide, the proteinaceous material includes at least one member selected from the group consisting of bovine serum albumin, egg albumen, whey, gelatin and zein, just to name a few possibilities, and the polymeric material includes at least one member selected from the group consisting of polyvinyl alcohol, polyvinyl pyrrolidone, a latex and a terpene polymer. In one form of this embodiment, the polymeric material is polyvinyl alcohol. In one aspect of this embodiment, the composition includes at least about 1% by weight of the at least one pesticide, from about 5% to about 70% by weight of the at least one metal oxide, from about 5% to about 60% by weight of the at least one proteinaceous material and from about 10% to about 70% by weight of the at least one polymeric material. It should be appreciated however that alternative values for the weight percentages of the at least one pesticide, metal oxide, proteinaceous material and polymeric material are contemplated.

In another embodiment, a composition includes at least one macrocyclic lactone insecticide and at least one metal oxide, and the composition exhibits enhanced pesticidal activity levels compared to a composition dissimilar only in not having the at least one metal oxide.

In still another embodiment, a composition includes at least one pesticide and iron oxide, and the composition exhibits enhanced pesticidal activity levels compared to a composition dissimilar only in not having the iron oxide.

In another embodiment, a composition includes from about 5% to about 35% by weight of spinetoram, from about 5% to about 60% by weight of *ferric* oxide, and from about 2% to about 12% by weight of a polymeric material, wherein the polymeric material includes polyvinyl pyrrolidone.

In yet another embodiment, a method includes applying to a locus where control is desired an insect-inactivating amount of one the above-described compositions. Still, further embodiments, forms, features, aspects, benefits, objects, and advantages of the present invention shall become apparent from the detailed description and examples provided.

### DETAILED DESCRIPTION OF THE INVENTION

Throughout this document, all temperatures are given in degrees Celsius, and all percentages are weight percentages unless otherwise stated.

Pesticide compositions exhibiting increased stability and enhanced pesticidal activity are described in this document. More particularly, in one or more embodiments, the pesticide compositions exhibit enhanced residual pesticidal activity. A pesticide is herein defined as any compound which shows some pesticidal or biocidal activity, or otherwise participates in the control or limitation of pest populations. Such compounds include fungicides, insecticides, nematocides, miticides, termiticides, rodenticides, molluscides, arthropodicides, herbicides, biocides, as well as pheromones and attractants and the like.

Examples of pesticides that can be included in the compositions described herein include, but are not limited to, antibiotic insecticides, macrocyclic lactone insecticides (for example, avermectin insecticides, milbemycin insecticides, and spinosyn insecticides), arsenical insecticides, botanical insecticides, carbamate insecticides (for example, benzofuranyl methylcarbamate insecticides, dimethylcarbamate insecticides, oxime carbamate insecticides, and phenyl methylcarbamate insecticides), diamide insecticides, desiccant insecticides, dinitrophenol insecticides, fluorine insecticides, formamidine insecticides, fumigant insecticides, inorganic insecticides, insect growth regulators (for example, chitin synthesis inhibitors, juvenile hormone mimics, juvenile hormones, moulting hormone agonists, moulting hormones, moulting inhibitors, precocenes, and other unclassified insect growth regulators), nereistoxin analogue insecticides, nicotinoid insecticides (for example, nitroguanidine insecticides, nitromethylene insecticides, and pyridylmethylamine insecticides), organochlorine insecticides, organophosphorus insecticides, oxadiazine insecticides, oxadiazolone insecticides, phthalimide insecticides, pyrazole insecticides, pyrethroid insecticides, pyrimidinamine insecticides, pyrrole insecticides, tetramic acid insecticides, tetronic acid insecticides, thiazole insecticides, thiazolidine insecticides, thiourea insecticides, urea insecticides, as well as, other unclassified insecticides.

Some of the particular insecticides that can be employed in the compositions described in this document include, but are not limited to, the following: 1,2-dichloropropane, 1,3 dichloropropene, abamectin, acephate, acetamiprid, acethion, acetoprole, acrinathrin, acrylonitrile, alanycarb, aldicarb, aldoxycarb, aldrin, allethrin, allosamidin, allyxycarb, alpha-cypermethrin, alpha-endosulfan, amidithion, aminocarb, amiton, amitraz, anabasine, athidathion, azadirachtin, azamethiphos, azinphos-ethyl, azinphosmethyl, azothoate, barium hexafluorosilicate, barthrin, bendiocarb, benfuracarb, bensultap, beta-cyfluthrin, beta-cypermethrin, bifenthrin, bioallethrin, bioethanomethrin, biopermethrin, bioresmethrin, bistrifluron, borax, boric acid, boric acid, bromfenvinfos, bromocyclen, bromo-DDT, bromophos, bromophosethyl, bufencarb, buprofezin, butacarb, butathiofos, butocarboxim, butonate, butoxycarboxim, cadusafos, calcium arsenate, calcium polysulfide, camphechlor, carbanolate, carbaryl, carbofuran, carbon disulfide, carbon tetrachloride, carbophenothion, carbosulfan, cartap, chlorantraniliprole, chlorbicyclen, chlordane, chlordecone, chlordimeform, chlorethoxyfos, chlorfenapyr, chlorfenvinphos, chlorfluazuron, chlormephos, chloroform, chloropicrin, chlorphoxim, chlorprazophos, chlorpyrifos, chlorpyrifos-methyl, chlorthiophos, chromafenozide, cinerin I, cinerin II, cismethrin, cloethocarb, closantel, clothianidin, copper acetoarsenite, copper arsenate, copper naphthenate, copper oleate, coumaphos, coumithoate, crotamiton, crotoxyphos, crufomate, cryolite, cyanofenphos, cyanophos, cyanthoate, cyclethrin, cycloprothrin, cyfluthrin, cyhalothrin, cypermethrin, cyphenothrin, cyromazine, cythioate, DDT, decarbofuran, deltamethrin, demephion, demephion-O, demephion-S, demeton, demeton-methyl, demeton-O, demeton-O-methyl, demeton-S, demeton-S-methyl, demeton-S-methylsulphon, diafenthiuron, dialifos, diatomaceous earth, diazinon, dicapthon, dichlofenthion, dichlorvos, dicresyl, dicrotophos, dicyclanil, dieldrin, diflubenzuron, dilor, dimefluthrin, dimefox, dimetan, dimethoate, dimethrin, dimethylvinphos, dimetilan, dinex, dinoprop, dinosam, dinotefuran, diofenolan, dioxabenzofos, dioxacarb, dioxathion, disulfoton, dithicrofos, d-limonene, DNOC, doramectin, ecdysterone, emamectin, EMPC, empenthrin, endosulfan, endothion, endrin, EPN, epofenonane. eprinomectin, esfenvalerate, etaphos, ethiofencarb, ethion, ethiprole, ethoate-methyl, ethoprophos, ethyl formate, ethyl-DDD, ethylene dibromide, ethylene dichloride, ethylene oxide, etofenprox, etrimfos, EXD, famphur, fenamiphos, fenazaflor, fenchlorphos, fenethacarb, fenfluthrin, fenitrothion, fenobucarb, fenoxacrim, fenoxycarb, fenpirithrin, fenpropathrin, fensulfothion, fenthion, fenthion-ethyl, fenvalerate, fipronil, flonicamid, flubendiamide, flucofuron, flucycloxuron, flucythrinate, flufenerim, flufenoxuron, flufenprox, fluvalinate, fonofos, formetanate, formothion, formparanate, fosmethilan, fospirate, fosthietan, furathiocarb, furethrin, gamma-cyhalothrin, gamma-HCH, halfenprox, halofenozide, HCH, HEOD, heptachlor, heptenophos, heterophos, hexaflumuron, HHDN, hydramethylnon, hydrogen cyanide, hydroprene, hyquincarb, imidacloprid, imiprothrin, indoxacarb, iodomethane, IPSP, isazofos, isobenzan, isocarbophos, isodrin, isofenphos, isoprocarb, isoprothiolane, isothioate, isoxathion, ivermectin, jasmolin I, jasmolin II, jodfenphos, juvenile hormone I, juvenile hormone II, juvenile hormone III, kelevan, kinoprene, lambda-cyhalothrin, lead arsenate, lepimectin, leptophos, lindane, lirimfos, lufenuron, lythidathion, malathion, malonoben, mazidox, mecarbam, mecarphon, menazon, mephosfolan, mercurous chloride, mesulfenfos, metaflumizone, methacrifos, methamidophos, methidathion, methiocarb, methocrotophos, methomyl, methoprene, methoxychlor, methoxyfenozide, methyl bromide, methylchlorofonn, methylene chloride, metofluthrin, metolcarb, metoxadiazone, mevinphos, mexacarbate, milbemectin, milbemycin oxime, mipafox, mirex, monocrotophos, morphothion, moxidectin, naftalofos, naled, naphthalene, nicotine, nifluridide, nitenpyram, nithiazine, nitrilacarb, novaluron, noviflumuron, omethoate, oxamyl, oxydemeton-methyl, oxydeprofos, oxydisulfoton, para-dichlorobenzene, parathion, parathion-methyl, penfluron, pentachlorophenol, permethrin, phenkapton, phenothrin, phenthoate, phorate, phosalone, phosfolan, phosmet, phosnichlor, phosphamidon, phosphine, phoxim, phoxim-methyl, pirimetaphos, pirimicarb, pirimiphos-ethyl, pirimiphos-methyl, potassium arsenite, potassium thiocyanate, pp'-DDT, prallethrin. precocene I, precocene II, precocene III, primidophos, profenofos, profluthrin, promacyl, promecarb, propaphos, propetamphos, propoxur, prothidathion, prothiofos, prothoate, protrifenbute, pyraclofos, pyrafluprole, pyrazophos, pyresmethrin, pyrethrin I, pyrethrin II, pyridaben, pyridalyl, pyridaphenthion, pyrifluquinazon, pyrimidifen, pyrimitate, pyriprole, pyriproxyfen, quassia, quinalphos, quinalphosmethyl, quinothion, rafoxanide, resmethrin, rotenone, ryania, sabadilla, schradan, selamectin, silafluofen, silica gel, sodium arsenite, sodium fluoride, sodium hexafluorosilicate, sodium thiocyanate, sophamide, spinetoram, spinosad, spiromesifen, spirotetramat, sulcofuron, sulfluramid, sulfotep, sulfuryl fluoride, sulprofos, taufluvalinate, tazimcarb, TDE, tebufenozide, tebufenpyrad, tebupirimfos, teflubenzuron, tefluthrin, temephos, TEPP, terallethrin, terbufos, tetrachloroethane, tetrachlorvinphos, tetramethrin, theta-cypermethrin, thiacloprid, thiamethoxam, thicrofos, thiocarboxime, thiocyclam, thiodicarb, thiofanox, thiometon, thiosultap, thuringiensin, tolfenpyrad, tralomethrin, transfluthrin, transpermethrin, triarathene, triazamate, triazophos, trichlorfon, trichlormetaphos-3, trichloronat, trifenofos, triflumuron, trimethacarb, triprene, vamidothion, vaniliprole, XMC, xylylcarb, zeta-cypermethrin, zolaprofos, and a-ecdysone.

Additionally, it is contemplated that any combination of the above insecticides can be employed in the compositions described herein. For more information consult **"**COMPENDIUM OF PESTICIDE COMMON NAMES" located at http://www.alanwood.net/pesticides/index.html. Also consult "THE PESTICIDE MANUAL" 14th Edition, edited by C D S Tomlin, copyright 2006 by British Crop Production Council.

Various pesticides are susceptible to chemical and physical degradation in the presence of certain environmental influences, such as heat and/or light. Pesticides that are susceptible to degradation with respect to the latter of these influences are commonly referred to as "photo-labile." With respect to at least some photo-labile pesticides, it is believed that their degradation can be attributed to a reaction with singlet oxygen. Examples of pesticides that are reactive with singlet oxygen include, but are not limited to, certain olefins, aromatics, phenols, naphthols, furans, pyrans and other heterocycles containing oxygen; pyrroles, oxazoles, imidazoles, indoles and other heterocycles containing nitrogen; aliphatic, alicyclic and aromatic amines; amino acids, peptides and proteins; and sulfur containing compounds such as mercaptans and sulfides; and the like. Further details regarding the determination of whether a pesticide is reactive with singlet oxygen are provided in International Patent Publication No. WO 2007/053760. It should be appreciated that any one or combination of the aforementioned photo-labile, singlet oxygen reactive pesticides could be included in the compositions described herein.

More particular examples of photo-labile, singlet oxygen reactive pesticides that could be included either alone or in combination with each other in the compositions described herein include, but are not limited to, natural products which are microorganisms, microbial products, and materials derived or extracted from plants, animals, or mineral-bearing rocks. These natural products include products derived from naturally derived soil dwelling organisms such as actinomycete bacteria such as, for example, macrocyclic lactone insecticides. One exemplary macrocyclic lactone insecticide includes avermectins and derivatives thereof, such as abamectin, doramectin, emamectin, eprinomectin, ivermectin and selamectin. Another exemplary macrocyclic lactone insecticide includes milbemycins and derivatives thereof, such as lepimectin, milbemectin, milbemycin oxime and moxidectin. Yet another exemplary macrocyclic lactone insecticide includes spinosyns, such as spinosad, and derivatives thereof such as synthetically produced spinetoram as disclosed in U.S. Patents 5,227,295; 5,670,364; 5,591,606; 6,001,981; 6,143,526; 6,455,504; 6,585,990; 6,919,464; 5,362,634; 5,539,089; and 5,202,242, each of which is hereby incorporated herein by reference in its entirety. Other natural products include sabadilla or veratrine, pyrethrum or pyrethrin, neem oil or azadirachtin, rotenone, ryania or ryanodine, *Bacillus thuringiensis* (B. t.), *Bacillus subtilis,* pheromones, natural attractants and the like. Other pesticides that could be included in the compositions described herein can include synthetically produced pesticides which are reactive toward singlet oxygen. Examples include, but are not limited to indoxacarb, imazalil and fenpropimorph. In addition to the foregoing, it should be appreciated that the compositions described herein could also include at least one pesticide which is reactive with singlet oxygen and at least one other pesticide which is not reactive with singlet oxygen or otherwise photo-labile.

In one embodiment, a composition includes at least one or a mixture of the aforementioned pesticides and at least one metal oxide. In this embodiment, the composition exhibits enhanced pesticidal activity compared to a composition dissimilar only in not having the at least one metal oxide. For example, it is contemplated that the activity or half-life of the composition is extended and therefore the same activity can be achieved with a lower amount of the composition when compared to a composition dissimilar only in not having the metal oxide. Additionally or alternatively, it is contemplated that improved pesticidal control over time is achieved with the composition including the metal oxide when compared to a composition dissimilar only in not having the metal oxide.

As used herein, the term "metal oxide" is used to describe a compound containing at least one oxygen atom and at least one metal atom. In one form, the metal oxide is insoluble in water. Additionally or alternatively, it is contemplated that the metal oxide may be a transition metal oxide. Non-limiting examples of transition metal oxides include zinc oxide; an iron oxide, such *as ferrous* (iron (II) oxide) or *ferric* (iron (III) oxide) oxide as well as iron (II, III) oxide; a copper oxide, such as *cuprous* (copper (I) oxide) or *cupric* (copper (II) oxide) oxide; a titanium oxide, such as titanium dioxide (titanium (IV) oxide), titanium (II) oxide and titanium (III) oxide; a cobalt oxide, such as cobalt (II) oxide and cobalt (III) oxide; a nickel oxide, such as nickel (II) oxide or nickel (III) oxide; a manganese oxide, such as manganese (II, III) oxide; a chromium oxide, such as chromium (III) oxide or chromium (IV) oxide; silver oxide; palladium oxide; and lanthanum oxide. In one or more forms, the metal oxide may also be a hydroxide or part of a hydrate complex. Examples of these include zinc hydroxide, partially dehydrated zinc hydroxide or zinc oxide hydroxide, iron (II) hydroxide, iron (III) hydroxide, iron oxide hydroxide, anhydrous or hydrated iron oxide and iron oxide hydroxide, manganese hydroxide, manganese oxide hydroxide, hydrated manganese hydroxide or manganese oxide hydroxide, copper hydroxide, partially dehydrated copper hydroxide or copper oxide hydroxide, titanium hydroxide, titanium oxide hydroxide, hydrated titanium hydroxide or titanium oxide hydroxide. It should be appreciated that a combination of one or more of the aforementioned metal oxides can be employed in the compositions described herein. In one particular form, the metal oxide is selected from the group consisting of zinc oxide, *ferric* oxide, *cupric* oxide, titanium dioxide, manganese oxide and mixtures thereof.

The metal oxide is typically present within the composition of this embodiment in an activity enhancing amount. An activity enhancing amount is an amount which increases the half life of the composition, or alternatively will enable the composition to achieve the same control of pests at a level which is less than the amount required for the same pesticidal protection or control of the composition in the absence of the metal oxide. In other words, the metal oxide will either reduce the rate required for protection or extend the residuality of the composition. In one exemplary form, the composition includes at least about 1% by weight of the pesticide and from about 2% to about 90% by weight of the metal oxide. In another form, the composition includes at least about 2% by weight of the pesticide and from about 5% to about 85% by weight of the metal oxide. In still another form, the composition includes from about 2% to about 45% by weight of the pesticide and from about 5% to about 85% by weight of the metal oxide. In yet another form, the composition includes from about 3% to about 35% by weight of the pesticide and from about 10% to about 80% by weight of the metal oxide. In another form, the composition includes from about 5% to about 35% by weight of the pesticide and from about 5% to about 70% by weight of the metal oxide. In yet another form, the composition includes from about 5% to about 35% by weight of the pesticide and from about 5% to about 60% by weight of the metal oxide. In still another form, the composition includes from about 5% to about 30% by weight of the pesticide and from about 15% to about 75% by weight of the metal oxide. Still, in another form, the composition includes from about 10% to about 30% by weight of the pesticide and from about 20% to about 60% by weight of the metal oxide. However, it should be appreciated that alternative values for the weight percentages of the pesticide and metal oxide are contemplated. For example, in one other form, the composition includes from about 20% to about 40% by weight of the pesticide and from about 40% to about 60% by weight of the metal oxide. In yet another form, the composition includes from about 25% to about 35% by weight of the pesticide and from about 45% to about 55% by weight of the metal oxide.

In another form, the composition includes a ratio by weight between the metal oxide and the pesticide from about 1:12 to about 12:1. In another more particular form, the composition includes a ratio by weight between the metal oxide and the pesticide from about 1:10 to about 10:1. In yet another more particular form, the composition includes a ratio by weight between the metal oxide and the pesticide from about 1:4 to about 8:1. In still another more particular form, the composition includes a ratio by weight between the metal oxide and the pesticide from about 1:2 to about 6:1. In another more particular form, the composition includes a ratio by weight between the metal oxide and the pesticide from about 1:1 to about 6:1. In still another form, the composition includes a ratio by weight between the metal oxide and the pesticide from about 1:1 to about 4:1.

It should be appreciated however that alternative values for the weight ratio between the metal oxide and the pesticide are contemplated. For example, in one embodiment, it is contemplated that a composition may include a ratio, by weight, between the metal oxide and the pesticide between about 1:100 and about 100:1. In another embodiment, it is contemplated that a composition may include a ratio, by weight, between the metal oxide and the pesticide between about 1:50 and about 50:1. In yet another embodiment, it is contemplated that a composition may include a ratio, by weight, between the metal oxide and the pesticide between about 1:20 and about 20:1.

Still, various alternative embodiment pesticide compositions that include at least one pesticide and at least one metal oxide are contemplated. For example, in one particular embodiment, a composition includes at least one pesticide, at least one metal oxide and at least one proteinaceous material. It should be appreciated that the pesticide and the metal oxide in this embodiment can be one or a mixture of those examples respectively identified above for each. As used herein, the term "proteinaceous material" is used to describe a material, composition or compound that is defined by a protein, includes at least one protein or is a basic element of a protein. In one non-limiting form, the proteinaceous material includes a water-soluble protein. Further non-limiting examples of proteinaceous materials include albumin, such as egg albumen or bovine serum albumin (BSA); casein; gelatin; zein; a whey composition, such as a mixture of lactose and whey protein; whey protein and amino acids such as cysteine, methionine, trytophan, histidine, tyrosine, arginine, lysine, glutamine, glutamic acid, cystine, serine and asperigine, just to name a few possibilities. In one aspect of this embodiment, the composition exhibits enhanced pesticidal activity compared to a composition dissimilar only in not having the metal oxide and the at least one proteinaceous material. For example, it is contemplated that the activity or half-life of the composition is extended and therefore the same activity can be achieved with a lower amount of the composition when compared to a composition dissimilar only in not having the metal oxide and the proteinaceous material. Additionally or alternatively, it is contemplated that improved pesticidal control over time is achieved with the composition including the metal oxide and the proteinaceous material when compared to a composition dissimilar only in not having the metal oxide and the proteinaceous material.

The metal oxide and proteinaceous material are typically present within the composition of this embodiment in an activity enhancing amount. An activity enhancing amount is an amount which increases the half life of the composition, or alternatively will enable the composition to achieve the same control of pests at a level which is less than the amount required for the same pesticidal protection or control of the composition in the absence of the metal oxide and the proteinaceous material. In other words, the metal oxide and the proteinaceous material will either reduce the rate required for protection or extend the residuality of the composition.

In one form of this embodiment, it is contemplated that the composition can include at least about 1% by weight of the pesticide, from about 5% to about 75% by weight of the metal oxide and from about 2% to about 80% by weight of the proteinaceous material. In another form, the composition includes at least about 2% by weight of the pesticide, from about 5% to about 75% by weight of the metal oxide and from about 2% to about 80% by weight of the proteinaceous material. In still another form, the composition includes from about 2% to about 45% by weight of the pesticide, from about 5% to about 75% by weight of the metal oxide and from about 3% to about 80% by weight of the proteinaceous material. In yet another form, the composition includes from about 3% to about 40% by weight of the pesticide, from about 10% to about 60% by weight of the metal oxide and from about 5% to about 70% by weight of the proteinaceous material. In still another form, the composition includes from about 5% to about 40% by weight of the pesticide, from about 15% to about 50% by weight of the metal oxide and from about 20% to about 60% by weight of the proteinaceous material. In yet another form, the composition includes from about 10% to about 40% by weight of the pesticide, from about 15% to about 35% by weight of the metal oxide and from about 25% to about 50% by weight of the proteinaceous material. Still, in another form, the composition includes from about 10% to about 35% by weight of the pesticide, from about 15% to about 35% by weight of the metal oxide and from about 25% to about 50% by weight of the proteinaceous material. However, it should be appreciated that alternative values for the weight percentages of the pesticide, metal oxide and proteinaceous material are contemplated. For example, in a further form, the composition includes from about 5% to about 40% by weight of the pesticide, from about 10% to about 60% by weight of the metal oxide and from about 2% to about 30% by weight of the proteinaceous material. In still another form, the composition includes from about 5% to about 35% by weight of the pesticide, from about 10% to about 60% by weight of the metal oxide and from about 2% to about 20% by weight of the proteinaceous material.

In another form of this embodiment, the composition includes a ratio by weight between the metal oxide and the pesticide between about 1:4 and about 10:1, about 1:2 and about 8:1, about 1:2 and about 6:1 or about 1:1 and about 4:1. In another form, the composition includes a ratio by weight between the proteinaceous material and the pesticide between about 1:10 and about 12:1, about 1:8 and about 12:1, about 1:4 and about 10:1, about 1:4 and about 8:1 or about 1:2 and about 5:1. In yet another form, the composition includes a ratio by weight between the proteinaceous material and the metal oxide between about 1:20 and about 12:1, about 1:12 and about 12:1, about 1:10 and about 10:1, about 1:8 and 8:1, about 1:5 and about 4:1 or about 1:2 and about 2:1. Still, it is also contemplated that the composition could include a combination of one or more of the weight ratios set forth above between the metal oxide and the pesticide, the proteinaceous material and the pesticide and the proteinaceous material and the metal oxide.

In one more particular form, the composition includes a ratio by weight between the metal oxide and the pesticide between about 1:4 and about 10:1, between the proteinaceous material and the pesticide between about 1:8 and about 12:1 and between the proteinaceous material and the metal oxide between about 1:12 and about 10:1. In an alternative form, the composition includes a ratio by weight between the metal oxide and the pesticide between about 1:2 and about 8:1, between the proteinaceous material and the pesticide between about 1:8 and about 10:1 and between the proteinaceous material and the metal oxide between about 1:12 and about 8:1. In another alternative form, the composition includes a ratio by weight between the metal oxide and the pesticide between about 1:2 and about 8:1, between the proteinaceous material and the pesticide between about 1:4 and about 10:1 and between the proteinaceous material and the metal oxide between about 1:8 and about 8:1. Still, in yet another form, the composition includes a ratio by weight between the metal oxide and the pesticide from about 1:2 to about 6:1, between the proteinaceous material and the pesticide from about 1:4 to about 8:1 and between the proteinaceous material and the metal oxide from about 1:5 to about 4:1. In another form, the composition includes a ratio by weight between the metal oxide and the pesticide from about 1:1 to about 4:1, between the proteinaceous material and the pesticide from about 1:2 to about 5:1 and between the proteinaceous material and the metal oxide from about 1:2 to about 2:1.

Still, further variations in the foregoing weight ratios are contemplated. For example, in one embodiment, it is contemplated that a composition may include a ratio, by weight, between the metal oxide and the pesticide between about 1:100 and about 100:1, between the proteinaceous material and the pesticide between about 1:100 and about 100:1 and between the proteinaceous material and the metal oxide between about 1:100 and about 100:1. In another embodiment, it is contemplated that a composition may include a ratio, by weight, between the metal oxide and the pesticide between about 1:50 and about 50:1, between the proteinaceous material and the pesticide between about 1:50 and about 50:1 and between the proteinaceous material and the metal oxide between about 1:50 and about 50:1. In yet another embodiment, it is contemplated that a composition may include a ratio, by weight, between the metal oxide and the pesticide between about 1:20 and about 20:1, between the proteinaceous material and the pesticide between about 1:20 and about 20:1 and between the proteinaceous material and the metal oxide between about 1:20 and about 20:1.

In yet another alternative embodiment, a composition includes at least one polymeric material in addition to at least one pesticide and at least one metal oxide. In this embodiment, it should be appreciated that the pesticide and metal oxide can be one or more of those examples respectively identified above for each. In one form of this embodiment, the composition exhibits enhanced pesticidal activity compared to a composition dissimilar only in not having the metal oxide and polymeric material. For example, it is contemplated that the activity or half-life of the composition is extended and therefore the same activity can be achieved with a lower amount of the composition when compared to a composition dissimilar only in not having the metal oxide and the polymeric material. Additionally or alternatively, it is contemplated that improved pesticidal control over time is achieved with the composition including the metal oxide and polymeric material when compared to a composition dissimilar only in not having the metal oxide and polymeric material.

As used herein, the term "polymeric material" is used to describe a material, compound or composition that is defined by or includes at least one polymer or a derivative thereof. In one non-limiting example, the polymeric material includes polyvinyl alcohol. In other examples, the polymeric material may include: a derivative of polyvinyl alcohol; polyvinyl pyrrolidone and/or one or more derivatives thereof; natural or synthetic latexes; a polysaccharide and/or one or more derivatives thereof, or polyvinyl acetate and/or one or more derivatives thereof. In one specific example, the polymeric material may be a high molecular weight vinyl-acrylic latex, such as UCAR™ Latex 379G commercially available from The Dow Chemical Company, 2030 Dow Center, Midland, Michigan 48674. In another specific example, the polymeric material may be a terpene polymer, such as NU FILM 17® commercially available from Miller Chemical and Fertilizer Corporation, P.O. Box 333, 120 Radio Road, Hanover, Pennsylvania 17331. In still another example, the polymeric material may be a polysaccharide or modified polysaccharide such as starch, including water-soluble starches, potato starch and other processed starches, chitosan or methyl cellulose. In another example, the polymeric material may be a hypromellose polymer, such as METHOCEL™ K4M commercially available from The Dow Chemical Company. It is also contemplated that in one or more forms, the composition could include a mixture of any of the foregoing examples of polymeric materials.

The metal oxide and polymeric material are typically present within the composition of this embodiment in an activity enhancing amount. An activity enhancing amount is an amount which increases the half life of the composition, or alternatively will enable the composition to achieve the same control of pests at a level which is less than the amount required for the same pesticidal protection or control of the composition in the absence of the metal oxide and the polymeric material. In other words, the metal oxide and the polymeric material will either reduce the rate required for protection or extend the residuality of the composition.

In one form of this embodiment, it is contemplated that the composition can include at least about 1% by weight of the pesticide, between about 5% and about 75% by weight of the metal oxide and between about 0.5% and about 80% by weight of the polymeric material. In another form, the composition includes at least about 1% by weight of the pesticide, between about 5% and about 75% by weight of the metal oxide and between about 1% and about 80% by weight of the polymeric material. In yet another form, the composition includes at least about 2% by weight of the pesticide, between about 5% and about 75% by weight of the metal oxide and from about 3% to about 75% by weight of the polymeric material. In still another form, the composition includes between about 2% and about 45% by weight of the pesticide, between about 10% and about 70% by weight of the metal oxide and between about 4% and about 65% by weight of the polymeric material. In yet another form, the composition includes between about 5% and about 40% by weight of the pesticide, between about 10% and about 65% by weight of the metal oxide and between about 5% and about 50% by weight of the polymeric material. Still, further variations in the values of the weight percentages for the pesticide, metal oxide and polymeric material are contemplated.

For example, in one form it is contemplated that the composition can include at least about 1% by weight of the pesticide, from about 15% to about 45% by weight of the metal oxide and from about 35% to about 65% by weight of the polymeric material. In another form, the composition includes at least about 2% by weight of the pesticide, from about 15% to about 45% by weight of the metal oxide and from about 35% to about 65% by weight of the polymeric material. In still another form, the composition includes from about 2% to about 30% by weight of the pesticide, from about 15% to about 45% by weight of the metal oxide and from about 35% to about 65% by weight of the polymeric material. In yet another form, the composition includes from about 5% to about 25% by weight of the pesticide, from about 20% to about 40% by weight of the metal oxide and from about 40% to about 60% by weight of the polymeric material. In still another form, the composition includes from about 8% to about 20% by weight of the pesticide, from about 25% to about 35% by weight of the metal oxide and from about 45% to about 55% by weight of the polymeric material.

Alternative forms of the composition in addition to those provided above are also contemplated. For example, in yet another form, the composition includes from about 1% to about 40% by weight of the pesticide, from about 5% to about 65% by weight of the metal oxide and from about 0.5% to about 30% by weight of the polymeric material. In another form, the composition includes from about 2% to about 35% by weight of the pesticide, from about 5% to about 60% by weight of the metal oxide and from about 1% to about 20% by weight of the polymeric material. In still another form, the composition includes from about 5% to about 35% by weight of the pesticide, from about 5% to about 60% by weight of the metal oxide and from about 1% to about 15% by weight of the polymeric material. In yet another form, the composition includes from about 5% to about 35% by weight of the pesticide, from about 5% to about 60% by weight of the metal oxide and from about 2% to about 12% by weight of the polymeric material. In one other form, the composition includes from about 15% to about 35% by weight of the pesticide, from about 40% to about 60% by weight of the metal oxide and from about 2% to about 12% by weight of the polymeric material. In still another form, the composition includes from about 25% to about 35% by weight of the pesticide, from about 45% to about 55% by weight of the metal oxide and from about 2% to about 12% by weight of the polymeric material. In another form, the composition includes from about 25% to about 35% by weight of the pesticide, from about 45% to about 55% by weight of the metal oxide and from about 4% to about 10% by weight of the polymeric material.

In another form of this embodiment, the composition includes a ratio by weight between the metal oxide and the pesticide between about 1:8 and about 12:1, about 1:4 and about 8:1, about 1:2 and about 6:1 or about 1:1 and about 4:1. In another form, the composition includes a ratio by weight between the polymeric material and the pesticide between about 1:20 and about 20:1, about 1:12 and about 12:1, about 1:10 and about 10:1, about 1:8 and about 8:1, about 1:8 and 4:1, about 1:2 and about 8:1, or about 2:1 and about 6:1. In yet another form, the composition includes a ratio by weight between the polymeric material and the metal oxide between about 1:30 and about 30:1, about 1:20 and about 20:1, about 1:15 and about 15:1, about 1:10 and about 10:1, about 1:4 and about 10:1, about 1:4 and about 4:1, about 1:2 and about 6:1, or about 1:1 and about 3:1. Still, it is also contemplated that the composition could include a combination of one or more of the weight ratios set forth above between the metal oxide and the pesticide, the polymeric material and the pesticide, and the polymeric material and the metal oxide.

In one more particular form, the composition includes a ratio by weight between the metal oxide and the pesticide between about 1:4 to about 8:1, between the polymeric material and the pesticide between about 1:20 to about 10:1 and between the polymeric material and the metal oxide between about 1:30 to about 10:1. In an alternative form, the composition includes a ratio by weight between the metal oxide and the pesticide between about 1:4 to about 8:1, between the polymeric material and the pesticide between about 1:12 to about 8:1 and between the polymeric material and the metal oxide between about 1:20 to about 6:1. In yet another form, the composition includes a ratio by weight between the metal oxide and the pesticide between about 1:3 to about 8:1, between the polymeric material and the pesticide between about 1:8 to about 6:1 and between the polymeric material and the metal oxide between about 1:12 to about 4:1. In another form, the composition includes a ratio by weight between the metal oxide and the pesticide between about 1:2 to about 8:1, between the polymeric material and the pesticide between about 1:6 to about 4:1 and between the polymeric material and the metal oxide between about 1:10 to about 2:1. In another alternative form, the composition includes a ratio by weight between the metal oxide and the pesticide between about 1:1 to about 8:1, between the polymeric material and the pesticide between about 1:4 to about 4:1 and between the polymeric material and the metal oxide between about 1:8 to about 2:1. Still, in yet another form, the composition includes a ratio by weight between the metal oxide and the pesticide from about 2:1 to about 4:1, between the polymeric material and the pesticide from about 4:1 to about 6:1 and between the polymeric material and the metal oxide from about 1:1 to about 3:1. In one other form, the composition includes a ratio by weight between the metal oxide and the pesticide from about 1:1 to about 2:1, between the polymeric material and the pesticide from about 1:10 to about 1:3 and between the polymeric material and the metal oxide from about 1:12 to about 1:4.

Still, further variations in the foregoing weight ratios are contemplated. For example, in one form, it is contemplated that a composition may include a ratio, by weight, between the metal oxide and the pesticide between about 1:100 and about 100:1, between the polymeric material and the pesticide between about 1:100 and about 100:1 and between the polymeric material and the metal oxide between about 1:100 and about 100:1. In another form, it is contemplated that a composition may include a ratio, by weight, between the metal oxide and the pesticide between about 1:50 and about 50:1, between the polymeric material and the pesticide between about 1:50 and about 50:1 and between the polymeric material and the metal oxide between about 1:50 and about 50:1. Still, in yet another form, it is contemplated that a composition may include a ratio, by weight, between the metal oxide and the pesticide between about 1:20 and about 20:1, between the polymeric material and the pesticide between about 1:20 and about 20:1 and between the polymeric material and the metal oxide between about 1:20 and about 20:1.

In another alternative embodiment, a composition includes at least one pesticide, at least one metal oxide, at least one proteinaceous material and at least one polymeric material. In this particular embodiment, it should be appreciated that the pesticide, metal oxide, proteinaceous material and polymeric material can be one or more of those examples respectively identified above for each. In one form of this embodiment, the composition exhibits enhanced pesticidal activity compared to a composition dissimilar only in not having the metal oxide, proteinaceous material and polymeric material. For example, it is contemplated that the activity or half-life of the composition is extended and therefore the same activity can be achieved with a lower amount of the composition when compared to a composition dissimilar only in not having the metal oxide, proteinaceous material and polymeric material. Additionally or alternatively, it is contemplated that improved pesticidal control over time is achieved with the composition including the metal oxide, proteinaceous material and polymeric material when compared to a composition dissimilar only in not having the metal oxide, proteinaceous material and polymeric material.

The metal oxide, proteinaceous material and polymeric material are typically present within the composition of this embodiment in an activity enhancing amount. An activity enhancing amount is an amount which increases the half life of the composition, or alternatively will enable the composition to achieve the same control of pests at a level which is less than the amount required for the same pesticidal protection or control of the composition in the absence of the metal oxide, proteinaceous material and polymeric material. In other words, the metal oxide, proteinaceous material and polymeric material will either reduce the rate required for protection or extend the residuality of the composition.

In one form of this embodiment, it is contemplated that the composition can include at least about 0.1% by weight of the pesticide, from about 5% to about 70% by weight of the metal oxide, from about 5% to about 60% by weight of the proteinaceous material and from about 10% to about 70% by weight of the polymeric material. In another form, the composition includes at least about 1% by weight of the pesticide, from about 5% to about 70% by weight of the metal oxide, from about 5% to about 60% by weight of the proteinaceous material and from about 10% to about 70% by weight of the polymeric material. In yet another form, the composition includes from about 2% to about 35% by weight of the pesticide, from about 5% to about 70% by weight of the metal oxide, from about 5% to about 60% by weight of the proteinaceous material and from about 10% to about 70% by weight of the polymeric material.

Still, other forms of this embodiment are contemplated. For example, in one further form, the composition includes from about 3% to about 30% by weight of the pesticide, from about 10% to about 60% by weight of the metal oxide, from about 5% to about 50% by weight of the proteinaceous material and from about 10% to about 55% by weight of the polymeric material. In another form, the composition includes from about 5% to about 25% by weight of the pesticide, from about 15% to about 55% by weight of the metal oxide, from about 8% to about 50% by weight of the proteinaceous material and from about 15% to about 45% by weight of the polymeric material. In yet another form, the composition includes from about 10% to about 20% by weight of the pesticide, from about 15% to about 40% by weight of the metal oxide, from about 8% to about 30% by weight of the proteinaceous material and from about 15% to about 35% by weight of the polymeric material. It should be appreciated however that further variations in the values of the weight percentages for the pesticide, metal oxide, proteinaceous material and polymeric material are contemplated.

In another form of this embodiment, the composition includes a ratio by weight between the metal oxide and the pesticide between about 1:4 and about 10:1, about 1:2 and about 8:1, about 1:1 and about 6:1 or about 1:1 and about 4:1. In another form, the composition includes a ratio by weight between the proteinaceous material and the pesticide between about 1:4 and about 10:1, about 1:2 and about 8:1, about 1:1 and about 5:1 or about 1:1 and about 3:1. In yet another form, the composition includes a ratio by weight between the polymeric material and the pesticide between about 1:4 and about 10:1, about 1:2 and about 8:1, about 1:1 and about 6:1 or about 1:1 and about 5:1. Still, it is also contemplated that the composition could include a combination of one or more of the weight ratios set forth above between the metal oxide and the pesticide, the proteinaceous material and the pesticide and the polymeric material and the pesticide.

In one more particular form, the composition includes a ratio by weight between the metal oxide and the pesticide between about 1:4 and about 10:1, between the proteinaceous material and the pesticide between about 1:4 and about 10:1 and between the polymeric material and the pesticide between about 1:4 and about 10:1. In an alternative form, the composition includes a ratio by weight between the metal oxide and the pesticide between about 1:2 and about 8:1, between the proteinaceous material and the pesticide between about 1:2 and about 8:1 and between the polymeric material and the pesticide between about 1:2 and about 8:1. Still, in yet another form, the composition includes a ratio by weight between the metal oxide and the pesticide from about 1:1 to about 6:1, between the proteinaceous material and the pesticide from about 1:1 to about 5:1 and between the polymeric material and the pesticide from about 1:1 to about 6:1. In another form, the composition includes a ratio by weight between the metal oxide and the pesticide from about 1:1 to about 4:1, between the proteinaceous material and the pesticide from about 1:1 to about 3:1 and between the polymeric material and the pesticide from about 1:1 to about 5:1. Still, further variations in the foregoing weight ratios are contemplated.

The compositions described above can be prepared and provided in any suitable manner and also include other components, further details of which will be provided below. In one exemplary form, the pesticide, metal oxide, one or both of the polymeric material and proteinaceous material if present as appropriate dependent on the respective composition, water and any other components, if present, are mixed together, homogenized and provided as a liquid composition. The liquid composition may then be spray dried to provide a solid composition, which by way of non-limiting example, may be in a powder or granular form. During the spray drying, the liquid composition is at least partially dehydrated or dried, with such dehydration or drying resulting in the conversion of the liquid composition to the solid composition which includes a smaller percentage by weight of water than the liquid composition. In one or more forms, the spray drying will remove all or substantially all of the water from the liquid composition as it is converted to the solid composition. However, it should be appreciated that residual water may be present in one or more forms of the solid composition. Additionally, as will be appreciated by those skilled in the art, the parameters utilized during the spray drying process (e.g., feed rate, nozzle pressure, inlet temperature and outlet temperature) will be dependent on the specific formulation of each composition and limited by the upper and lower degradation limits of the ingredients included in each composition being spray dried.

For example, in one form, the solid composition includes between about 0.001% to about 20% by weight of water after the spray drying. In yet another form, the solid composition includes from about 0.001% to about 15% by weight of water after the spray drying. In still another form, the solid composition includes from about 0.001% to about 10% by weight of water after the spray drying. In another form, the solid composition includes from about 0.001% to about 5% by weight of water after the spray drying. In yet another form, the solid composition includes from about 0.001% to about 4% by weight of water after the spray drying. Still, in another form, the solid composition includes from about 0.001 % to about 2% by weight of water after the spray drying. In another form, the solid composition includes from about 0.001% to about 1% by weight of water after the spray drying. However, it should be appreciated that alternative values for the weight percentage of water in the solid composition after the spray drying are contemplated.

Accordingly, in one embodiment, a method includes providing a liquid composition that includes at least one pesticide, at least one metal oxide and water, and spray drying the liquid composition to provide a solid composition. In another embodiment, a method includes providing a liquid composition that includes at least one pesticide, at least one metal oxide, at least one proteinaceous material and water, and spray drying the liquid composition to provide a solid composition. In still another embodiment, a method includes providing a liquid composition that includes at least one pesticide, at least one metal oxide, at least one polymeric material and water, and spray drying the liquid composition to provide a solid composition. In yet another embodiment, a method includes providing a liquid composition that includes at least one pesticide, at least one metal oxide, at least one proteinaceous material, at least one polymeric material and water, and spray drying the liquid composition to provide a solid composition. In one particular form of these embodiments, the spray drying includes substantially removing all of the water from the respective liquid compositions as they are converted to solid compositions.

While not previously discussed, any other volatile materials besides water, if present in the liquid composition, will typically be entirely or substantially removed as the liquid composition is converted to the solid composition during the spray drying. However, it is contemplated that residual volatile materials other than water could be present in the solid composition after the spray drying. Additionally, the pesticide, metal oxide, proteinaceous and polymeric materials are generally not volatile and will generally not be affected by the spray drying. Thus, it should be appreciated that the solid composition after spray drying will include ratios by weight between the pesticide, metal oxide, proteinaceous and polymeric materials, as appropriate depending on the form of the liquid composition, that are the same as or substantially equivalent to the ratios by weight between these ingredients in the liquid composition.

### PESTS

In one or more additional embodiments, the invention disclosed in this document can be used to control pests.

In one embodiment, the invention disclosed in this document can be used to control pests of the **Phylum Nematoda.**

In another embodiment, the invention disclosed in this document can be used to control pests of the **Phylum Arthropoda.**

In another embodiment, the invention disclosed in this document can be used to control pests of the **Subphylum Chelicerata.**

In another embodiment, the invention disclosed in this document can be used to control pests of the **Class Arachnida.**

In another embodiment, the invention disclosed in this document can be used to control pests of the **Subphylum Myriapoda.**

In another embodiment, the invention disclosed in this document can be used to control pests of the **Class Symphyla.**

In another embodiment, the invention disclosed in this document can be used to control pests of the **Subphylum Hexapoda.**

In another embodiment, the invention disclosed in this document can be used to control pests of the **Class Insecta.**

In another embodiment, the invention disclosed in this document can be used to control **Coleoptera (beetles).** A non-exhaustive list of these pests includes, but is not limited to, *Acanthoscelides spp.* (weevils), *Acanthoscelides obtectus* (common bean weevil), *Agrilus planipennis* (emerald ash borer), *Agriotes spp.* (wireworms), *Anoplophora glabripennis* (Asian longhorned beetle), *Anthonomus spp.* (weevils), *Anthonomus grandis* (boll weevil), *Aphidius spp., Apion spp.* (weevils), *Apogonia spp.* (grubs), *Ataenius spretulus* (Black Turgrass Ataenius), *Atomaria linearis* (pygmy mangold beetle), *Aulacophore spp., Bothynoderes punctiventris* (beet root weevil), *Bruchus spp.* (weevils), *Bruchus pisorum* (pea weevil), *Cacoesia spp., Callosobruchus maculatus* (southern cow pea weevil), *Carpophilus hemipteras* (dried fruit beetle), *Cassida vittata, Cerosterna spp., Cerotoma spp.* (chrysomeids), *Cerotoma trifurcata* (bean leaf beetle), *Ceutorhynchus spp.* (weevils), *Ceutorhynchus assimilis* (cabbage seedpod weevil), *Ceutorhynchus napi* (cabbage curculio), *Chaetocnema spp.* (chrysomelids), *Colaspis spp.* (soil beetles), *Conoderus scalaris, Conoderus stigmosus, Conotrachelus nenuphar* (plum curculio), *Cotinus nitidis* (Green June beetle), *Crioceris asparagi* (asparagus beetle), *Cryptolestes ferrugineus* (rusty grain beetle), *Cryptolestes pusillus* (flat grain beetle), *Cryptolestes turcicus* (Turkish grain beetle), *Ctenicera spp.* (wireworms), *Curculio spp.* (weevils), *Cyclocephala spp.* (grubs), *Cylindrocpturus adspersus* (sunflower stem weevil), *Deporaus marginatus* (mango leaf-cutting weevil), *Dermestes lardarius* (larder beetle), *Dermestes maculates* (hide beetle), *Diabrotica spp.* (chrysolemids), *Epilachna varivestis* (Mexican bean beetle), *Faustinus cubae, Hylobius pales* (pales weevil), *Hypera spp.* (weevils), *Hypera postica* (alfalfa weevil), *Hyperdoes spp.* (Hyperodes weevil), *Hypothenemus hampei* (coffee berry beetle), *Ips spp.* (engravers), *Lasioderma serricorne* (cigarette beetle), *Leptinotarsa decemlineata* (Colorado potato beetle), *Liogenys fuscus*, *Liogenys suturalis*, *Lissorhoptrus oryzophilus* (rice water weevil), *Lyctus spp.* (wood beetles/powder post beetles), *Maecolaspis joliveti, Megascelis spp., Melanotus communis, Meligethes spp., Meligethes aeneus* (blossom beetle), *Melolontha melolontha* (common European cockchafer), *Oberea brevis, Oberea linearis, Oryctes rhinoceros* (date palm beetle), *Oryzaephilus mercator* (merchant grain beetle), *Oryzaephilus surinamensis* (sawtoothed grain beetle), *Otiorhynchus spp.* (weevils), *Oulema melanopus* (cereal leaf beetle), *Oulema oryzae, Pantomorus spp.* (weevils), *Phyllophaga spp.* (May/June beetle), *Phyllophaga cuyabana*, *Phyllotreta spp.* (chrysomelids), *Phynchites spp., Popillia japonica* (Japanese beetle), *Prostephanus truncates* (larger grain borer), *Rhizopertha dominica* (lesser grain borer), *Rhizotrogus spp.* (Eurpoean chafer), *Rhynchophorus spp.* (weevils), *Scolytus spp.* (wood beetles), *Shenophorus spp.* (Billbug), *Sitona lineatus* (pea leaf weevil), *Sitophilus spp.* (grain weevils), *Sitophilus granaries* (granary weevil), *Sitophilus oryzae* (rice weevil), *Stegobium paniceum* (drugstore beetle), *Tribolium spp.* (flour beetles), *Tribolium castaneum* (red flour beetle), *Tribolium confusum* (confused flour beetle), *Trogoderma variable* (warehouse beetle), and *Zabrus tenebioides.*

In another embodiment, the invention disclosed in this document can be used to control **Dermaptera (earwigs).**

In another embodiment, the invention disclosed in this document can be used to control **Dictyoptera (cockroaches).** A non-exhaustive list of these pests includes, but is not limited to, *Blattella germanica* (German cockroach), *Blatta orientalis* (oriental cockroach), *Parcoblatta pennylvanica, Periplaneta americana* (American cockroach), *Periplaneta australoasiae* (Australian cockroach), *Periplaneta brunnea* (brown cockroach), *Periplaneta fuliginosa* (smokybrown cockroach), *Pyncoselus suninamensis* (Surinam cockroach), and *Supella longipalpa* (brownbanded cockroach).

In another embodiment, the invention disclosed in this document can be used to control **Diptera (true flies).** A non-exhaustive list of these pests includes, but is not limited to, *Aedes spp.* (mosquitoes), *Agromyza frontella* (alfalfa blotch leafminer), *Agromyza spp.* (leaf miner flies), *Anastrepha spp.* (fruit flies), *Anastrepha suspensa* (Caribbean fruit fly), *Anopheles spp.* (mosquitoes), *Batrocera spp.* (fruit flies), *Bactrocera cucurbitae* (melon fly), *Bactrocera dorsalis* (oriental fruit fly), *Ceratitis spp.* (fruit flies), *Ceratitis capitata* (Mediterranea fruit fly), *Chrysops spp.* (deer flies), *Cochliomyia spp.* (screwworms), *Contarinia spp.* (Gall midges), *Culex spp.* (mosquitoes), *Dasineura spp.* (gall midges), *Dasineura brassicae* (cabbage gall midge), *Delia spp., Delia platura* (seedcorn maggot), *Drosophila spp.* (vinegar flies), *Fannia spp.* (filth flies), *Fannia canicularis* (little house fly), *Fannia scalaris* (latrine fly), *Gasterophilus intestinalis* (horse bot fly), *Gracillia perseae, Haematobia irritans* (horn fly), *Hylemyia spp.* (root maggots), *Hypoderma lineatum* (common cattle grub), *Liriomyza spp.* (leafminer flies), *Liriomyza brassica* (serpentine leafminer), *Melophagus ovinus* (sheep ked), *Musca spp.* (muscid flies), *Musca autumnalis* (face fly), *Musca domestica* (house fly), *Oestrus ovis* (sheep bot fly), *Oscinella frit* (frit fly), *Pegomyia betae* (beet leafminer), *Phorbia spp., Psila rosae* (carrot rust fly), *Rhagoletis cerasi* (cherry fruit fly), *Rhagoletis pomonella* (apple maggot), *Sitodiplosis mosellana* (orange wheat blossom midge), *Stomoxys calcitrans* (stable fly), *Tabanus spp.* (horse flies), and *Tipula spp.* (crane flies).

In another embodiment, the invention disclosed in this document can be used to control **Hemiptera (true bugs).** A non-exhaustive list of these pests includes, but is not limited to, *Acrosternum hilare* (green stink bug), *Blissus leucopterus* (chinch bug), *Calocoris norvegicus* (potato mirid), *Cimex hemipterus* (tropical bed bug), *Cimex lectularius* (bed bug), *Dagbertus fasciatus, Dichelops furcatus*, *Dysdercus suturellus* (cotton stainer), *Edessa meditabunda, Eurygaster maura* (cereal bug), *Euschistus heros, Euschistus servus* (brown stink bug), *Helopeltis antonii, Helopeltis theivora* (tea blight plantbug), *Lagynotomus spp.* (stink bugs), *Leptocorisa oratorius, Leptocorisa varicornis, Lygus spp.* (plant bugs), *Lygus hesperus* (western tarnished plant bug), *Maconellicoccus hirsutus, Neurocolpus longirostris, Nezara viridula* (southern green stink bug), *Phytocoris spp.* (plant bugs), *Phytocoris californicus, Phytocoris relativus, Piezodorus guildingi, Poecilocapsus lineatus* (fourlined plant bug), *Psallus vaccinicola, Pseudacysta perseae, Scaptocoris castanea*, and *Triatoma spp.* (bloodsucking conenose bugs/kissing bugs).

In another embodiment, the invention disclosed in this document can be used to control **Homoptera (aphids, scales, whiteflies, leafhoppers).** A non-exhaustive list of these pests includes, but is not limited to, *Acrythosiphon pisum* (pea aphid), *Adelges spp.* (adelgids), *Aleurodes proletella* (cabbage whitefly), *Aleurodicus disperses, Aleurothrixus floccosus* (woolly whitefly), *Aluacaspis spp., Amrasca bigutella bigutella, Aphrophora spp.* (leafhoppers), *Aonidiella aurantii* (California red scale), *Aphis spp.* (aphids), *Aphis gossypii* (cotton aphid), *Aphis pomi* (apple aphid), *Aulacorthum solani* (foxglove aphid), *Bemisia spp.* (whiteflies), *Bemisia argentifolii, Bemisia tabaci* (sweetpotato whitefly), *Brachycolus noxius* (Russian aphid), *Brachycorynella asparagi* (asparagus aphid), *Brevennia rehi, Brevicoryne brassicae* (cabbage aphid), *Ceroplastes spp.* (scales), *Ceroplastes rubens* (red wax scale), *Chionaspis spp.* (scales), *Chrysomphalus spp.* (scales), *Coccus spp.* (scales), *Dyscrphis plantaginea* (rosy apple aphid), *Empoasca spp.* (leafhoppers), *Eriosoma lanigerum* (woolly apple aphid), *Icerya purchasi* (cottony cushion scale), *Idioscopus nitidulus* (mango leafhopper), *Laodelphax striatellus* (smaller brown planthopper), *Lepidosaphes spp., Macrosiphum spp., Macrosiphum euphorbiae* (potato aphid), *Macrosiphum granarium* (English grain aphid), *Macrosiphum rosae* (rose aphid), *Macrosteles quadrilineatus* (aster leafhopper), *Mahanarva frimbiolata, Metopolophium dirhodum* (rose grain aphid), *Mictis longicornis, Myzus persicae* (green peach aphid), *Nephotettix spp.* (leafhoppers), *Nephotettix cinctipes* (green leafhopper), *Nilaparvata lugens* (brown planthopper), *Parlatoria pergandii* (chaff scale), *Parlatoria ziziphi* (ebony scale), *Peregrinus maidis* (corn delphacid), *Philaenus spp.* (spittlebugs), *Phylloxera vitifoliae* (grape phylloxera), *Physokermes piceae* (spruce bud scale), *Planococcus spp.* (mealybugs), *Pseudococcus spp.* (mealybugs), *Pseudococcus brevipes* (pine apple mealybug), *Quadraspidiotus perniciosus* (San Jose scale), Rhapalosiphum spp. (aphids), *Rhapalosiphum maida* (corn leaf aphid), *Rhapalosiphum padi* (oat bird-cherry aphid), *Saissetia spp.* (scales), *Saissetia oleae* (black scale), *Schizaphis graminum* (greenbug), *Sitobion avenae* (English grain aphid), *Sogatella furcifera* (white-backed planthopper), *Therioaphis spp.* (aphids), *Toumeyella spp.* (scales), *Toxoptera spp.* (aphids), *Trialeurodes spp.* (whiteflies), *Trialeurodes vaporariorum* (greenhouse whitefly), *Trialeurodes abutiloneus* (bandedwing whitefly), *Unaspis spp.* (scales), *Unaspis yanonensis* (arrowhead scale), *and Zulia entreriana.*

In another embodiment, the invention disclosed in this document can be used to control **Hymenoptera (ants, wasps, and bees).** A non-exhaustive list of these pests includes, but is not limited to, *Acromyrrmex spp., Athalia rosae, Atta spp.* (Ieafcutting ants), *Camponotus spp.* (carpenter ants), *Diprion spp.* (sawflies), *Formica spp.* (ants), *Iridomyrmex humilis* (Argentine ant), *Monomorium ssp., Monomorium minumum* (little black ant), *Monomorium pharaonis* (Pharaoh ant), *Neodiprion spp.* (sawflies), *Pogonomyrmex spp.* (harvester ants), *Polistes spp.* (paper wasps), *Solenopsis spp.* (fire ants), *Tapoinoma sessile* (odorous house ant), *Tetranomorium spp.* (pavement ants), *Vespula spp.* (yellow jackets), *and Xylocopa spp.* (carpenter bees).

In another embodiment, the invention disclosed in this document can be used to control **Isoptera (termites).** A non-exhaustive list of these pests includes, but is not limited to, *Coptotermes spp., Coptotermes curvignathus, Coptotermes frenchii, Coptotermes formosanus* (Formosan subterranean termite), *Cornitermes spp.* (nasute termites), *Cryptotermes spp.* (drywood termites), *Heterotermes spp.* (desert subterranean termites), *Heterotermes aureus, Kalotermes spp.* (drywood termites). *Incistitermes spp.* (drywood termites), *Macrotermes spp.* (fungus growing termites), *Marginitermes spp.* (drywood termites), *Microcerotermes spp.* (harvester termites), *Microtermes obesi, Procornitermes spp., Reticulitermes spp.* (subterranean termites), *Reticulitermes banyulensis, Reticulitermes grassei, Reticulitermes flavipes* (eastern subterranean termite), *Reticulitermes hageni, Reticulitermes hesperus* (western subterranean termite), *Reticulitermes santonensis, Reticulitermes speratus*, *Reticulitermes tibialis, Reticulitermes virginicus, Schedorhinotermes spp., and Zootermopsis spp.* (rotten-wood termites).

In another embodiment, the invention disclosed in this document can be used to control **Lepidoptera (moths and butterflies).** A non-exhaustive list of these pests includes, but is not limited to, *Achoea janata*, *Adoxophyes spp., Adoxophyes orana, Agrotis spp.* (cutworms), *Agrotis ipsilon* (black cutworm), *Alabama argillacea* (cotton leafworm), *Amorbia cuneana, Amyelosis transitella* (navel orangeworm), *Anacamptodes defectaria, Anarsia lineatella* (peach twig borer), *Anomis sabulijera* (jute looper), *Anticarsia gemmatalis* (velvetbean caterpillar), *Archips argyrospila* (fruit tree leafroller), *Archips rosana* (rose leaf roller), *Argyrotaenia spp.* (tortricid moths), *Argyrotaenia citrana* (orange tortrix), *Autographa gamma*, *Bonagota cranaodes*, *Borbo cinnara* (rice leaf folder), *Bucculatrix thurberiella* (cotton leaf perforator), *Caloptilia spp.* (leaf miners), *Capua reticulana, Carposina niponensis* (peach fruit moth), *Chilo spp., Chlumetia transversa* (mango shoot borer), *Choristoneura rosaceana* (oblique banded leaf roller), *Chrysodeixis spp., Cnaphalocerus medinalis* (grass leafroller), *Colias spp., Conpomorpha cramerella*, *Cossus cossus* (carpenter moth), *Crambus spp.* (Sod webworms), *Cydia funebrana* (plum fruit moth), *Cydia molesta* (oriental fruit moth), *Cydia nignicana* (pea moth), *Cydia pomonella* (codling moth), *Darna diducta, Diaphania spp.* (stem borers), *Diatraea spp.* (stalk borers), *Diatraea saccharalis* (sugarcane borer), *Diatraea graniosella* (southwester corn borer), *Earias spp.* (bollworms), *Earias insulata* (Egyptian bollworm), *Earias vitella* (rough northern bollworm), *Ecdytopopha aurantianum, Elasmopalpus lignosellus* (lesser cornstalk borer), *Epiphysias postruttana* (light brown apple moth), *Ephestia spp.* (flour moths), *Ephestia cautella* (almond moth), *Ephestia elutella* (tobbaco moth), *Ephestia kuehniella* (Mediterranean flour moth), *Epimeces spp., Epinotia aporema*, *Erionota thrax* (banana skipper), *Eupoecilia ambiguella* (grape berry moth), *Euxoa auxiliaris* (army cutworm), *Feltia spp.* (cutworms), *Gortyna spp.* (stemborers), *Grapholita molesta* (oriental fruit moth), *Hedylepta indicata* (bean leaf webber), *Helicoverpa spp.* (noctuid moths), *Helicoverpa armigera* (cotton bollworm), *Helicoverpa zea* (bollworm/corn earworm), *Heliothis spp.* (noctuid moths), *Heliothis virescens* (tobacco budworm), *Hellula undalis* (cabbage webworm), *Indarbela spp.* (root borers), *Keiferia lycopersicella* (tomato pinworm), *Leucinodes orbonalis* (eggplant fruit borer), *Leucoptera malifoliella, Lithocollectis spp., Lobesia botrana* (grape fruit moth), *Loxagrotis spp.* (noctuid moths), *Loxagrotis albicosta* (western bean cutworm), *Lymantria dispar* (gypsy moth), *Lyonetia clerkella* (apple leaf miner), *Mahasena corbetti* (oil palm bagworm), *Malacosoma spp.* (tent caterpillars), *Mamestra brassicae* (cabbage armyworm), *Maruca testulalis* (bean pod borer), *Metisa plana* (bagworm), *Mythimna unipuncta* (true armyworm), *Neoleucinodes elegantalis* (small tomato borer), *Nymphula depunctalis* (rice caseworm), *Operophthera brumata* (winter moth), *Ostrinia nubilalis* (European corn borer), *Oxydia vesulia, Pandemis cerasana* (common currant tortrix), *Pandemis heparana* (brown apple tortrix), *Papilio demodocus, Pectinophora gossypiella* (pink bollworrn), *Peridroma spp.* (cutworms), *Peridroma saucia* (variegated cutworm), *Perileucoptera coffeella* (white coffee leafminer), *Phthorimaea operculella* (potato tuber moth), *Phyllocnisitis citrella, Phyllonorycter spp.* (leafminers), *Pieris rapae* (imported cabbageworm), *Plathypena scabra, Plodia interpunctella* (Indian meal moth), *Plutella xylostella* (diamondback moth), *Polychrosis viteana* (grape berry moth), *Prays endocarpa, Prays oleae* (olive moth), *Pseudaletia spp.* (noctuid moths), *Pseudaletia unipunctata* (armyworm), *Pseudoplusia includens* (soybean looper), *Rachiplusia nu, Scirpophaga incertulas, Sesamia spp.* (stemborers), *Sesamia inferens* (pink rice stem borer), *Sesamia nonagrioides, Setora nitens, Sitotroga cerealella* (Angoumois grain moth), *Sparganothis pilleriana, Spodoptera spp.* (armyworms), *Spodoptera exigua* (beet armyworm), *Spodoptera fugiperda* (fall armyworm), *Spodoptera oridania* (southern armyworm), *Synanthedon spp.* (root borers), *Thecla basilides, Thermisia gemmatalis, Tineola bisselliella* (webbing clothes moth), *Trichoplusia ni* (cabbage looper), *Tuta absoluta, Yponomeuta spp., Zeuzera coffeae* (red branch borer), and *Zeuzera pyrina* (leopard moth).

In another embodiment, the invention disclosed in this document can be used to control **Mallophaga (chewing lice).** A non-exhaustive list of these pests includes, but is not limited to, *Bovicola ovis* (sheep biting louse), *Menacanthus stramineus* (chicken body louse), and *Menopon gallinea* (common hen house).

In another embodiment, the invention disclosed in this document can be used to control **Orthoptera (grasshoppers, locusts, and crickets).** A non-exhaustive list of these pests includes, but is not limited to, *Anabrus simplex* (Mormon cricket), *Gryllotalpidae* (mole crickets), *Locusta migratoria, Melanoplus spp.* (grasshoppers), *Microcentrum retinerve* (angular winged katydid), *Pterophylla spp.* (kaydids), *chistocerca gregaria, Scudderia furcata* (fork tailed bush katydid), and *Valanga nigricorni.*

In another embodiment, the invention disclosed in this document can be used to control **Phthiraptera (sucking lice).** A non-exhaustive list of these pests includes, but is not limited to, *Haematopinus spp.* (cattle and hog lice), *Linognathus ovillus* (sheep louse), *Pediculus humanus capitis* (human body louse), *Pediculus humanus humanus* (human body lice), and *Pthirus pubis* (crab louse).

In another embodiment, the invention disclosed in this document can be used to control **Siphonaptera (fleas).** A non-exhaustive list of these pests includes, but is not limited to, *Ctenocephalides canis* (dog flea), *Ctenocephalides felis* (cat flea), and *Pulex irritans* (human flea).

In another embodiment, the invention disclosed in this document can be used to control **Thysanoptera (thrips).** A non-exhaustive list of these pests includes, but is not limited to, *Frankliniella fusca* (tobacco thrips), *Frankliniella occidentalis* (western flower thrips), *Frankliniella shultzei Frankliniella williamsi* (corn thrips), *Heliothrips haemorrhaidalis* (greenhouse thrips), *Riphiphorothrips cruentatus, Scirtothrips spp., Scirtothrips citri* (citrus thrips), *Scirtothrips dorsalis* (yellow tea thrips), *Taeniothrips rhopalantennalis, and Thrips spp.*

In another embodiment, the invention disclosed in this document can be used to control **Thysanura (bristletails).** A non-exhaustive list of these pests includes, but is not limited to, *Lepisma spp.* (silverfish) and *Thermobia spp.* (firebrats).

In another embodiment, the invention disclosed in this document can be used to control **Acarina (mites and ticks).** A non-exhaustive list of these pests includes, but is not limited to, *Acarapsis woodi* (tracheal mite of honeybees), *Acarus spp.* (food mites), *Acarus siro* (grain mite), *Aceria mangiferae* (mango bud mite), *Aculops spp., Aculops lycopersici* (tomato russet mite), *Aculops pelekasi, Aculus pelekassi*, *Aculus schlechtendali* (apple rust mite), *Amblyomma americanum* (lone star tick), *Boophilus spp.* (ticks), *Brevipalpus obovatus* (privet mite), *Brevipalpus phoenicis* (red and black flat mite), *Demodex spp.* (mange mites), Dermacentor spp. (hard ticks), *Dermacentor variabilis* (american dog tick), *Dermatophagoides pteronyssinus* (house dust mite), *Eotetranycus spp., Eotetranychus carpini* (yellow spider mite), *Epitimerus spp., Eriophyes spp., Ixodes spp.* (ticks), *Metatetranycus spp., Notoedres cati, Oligonychus spp., Oligonychus coffee, Oligonychus ilicus* (southern red mite), *Panonychus spp., Panonychus citri* (citrus red mite), *Panonychus ulmi* (European red mite), *Phyllocoptruta oleivora* (citrus rust mite), *Polyphagotarsonemun latus* (broad mite), *Rhipicephalus sanguineus* (brown dog tick), *Rhizoglyphus spp.* (bulb mites), *Sarcoptes scabiei* (itch mite), *Tegolophus perseaflorae, Tetranychus spp., Tetranychus urticae* (twospotted spider mite), and *Varroa destructor* (honey bee mite).

In another embodiment, the invention disclosed in this document can be used to control **Nematoda (nematodes).** A non-exhaustive list of these pests includes, but is not limited to, *Aphelenchoides spp.* (bud and leaf & pine wood nematodes), *Belonolaimus spp.* (sting nematodes), *Criconemella spp.* (ring nematodes), *Dirofilaria immitis* (dog heartworm), *Ditylenchus spp.* (stem and bulb nematodes), *Heterodera spp.* (cyst nematodes), *Heterodera zeae* (corn cyst nematode), *Hirschmanniella spp.* (root nematodes), *Hoplolaimus spp.* (lance nematodes), *Meloidogyne spp.* (root knot nematodes), *Meloidogyne incognita* (root knot nematode), *Onchocerca volvulus* (hooktail worm), *Pratylenchus spp.* (lesion nematodes), *Radopholus spp.* (burrowing nematodes), and *Rotylenchus reniformis* (kidney-shaped nematode).

In another embodiment, the invention disclosed in this document can be used to control **Symphyla (symphylans).** A non-exhaustive list of these pests includes, but is not limited to, *Scutigerella immaculata.*

For more detailed information consult **"HANDBOOK OF PEST CONTROL-THE BEHAVIOR, LIFE HISTORY, AND CONTROL OF HOUSEHOLD PESTS"** by Arnold Mallis, 9th Edition, copyright 2004 by GIE Media Inc.

### MIXTURES

The compositions disclosed in this document can also be used, for reasons of economy, chemical and physical stability and synergy, with acaricides, algicides, antifeedants, avicides, bactericides, bird repellents, chemosterilants, fungicides, herbicide safeners, herbicides, insect attractants, insect repellents, mammal repellents, mating disrupters, molluscicides, other insecticides, other pesticides, plant activators, plant growth regulators, rodenticides, synergists, defoliants, desiccants, disinfectants, semiochemicals, and virucides (these categories not necessarily mutually exclusive).

### FORMULATIONS

The compositions described in this document may also be provided with phytologically-acceptable inert ingredients to provide or complement a carrier and can be formulated into, for example, baits, concentrated emulsions, dusts, emulsifiable concentrates, fumigants, gels, granules, microencapsulations, seed treatments, suspension concentrates, suspoemulsions, tablets, water soluble liquids, water dispersible granules or dry flowables, wettable powders, and ultra low volume solutions.

For further information on formulation types see **"CATALOGUE OF PESTICIDE FORMULATION TYPES AND INTERNATIONAL CODING SYSTEM"** Technical Monograph n°2, 5th Edition by CropLife International (2002).

Pesticide compositions can be frequently applied as aqueous suspensions or emulsions prepared from concentrated formulations of such compositions. Such water-soluble, water-suspendable, or emulsifiable formulations are either solids, usually known as wettable powders, or water dispersible granules, or liquids usually known as emulsifiable concentrates, or aqueous suspensions. Wettable powders, which may be compacted to form water dispersible granules, comprise an intimate mixture of the pesticide composition, a carrier, and surfactants. The carrier is usually chosen from among the attapulgite clays, the montmorillonite clays, the diatomaceous earths, or the purified silicates. Effective surfactants, which can comprise from about 0.5% to about 10% of the wettable powder, are found among sulfonated lignins, condensed naphthalenesulfonates, naphthalenesulfonates, alkylbenzenesulfonates, alkyl sulfates, and nonionic surfactants such as ethylene oxide adducts of alkyl phenols.

Emulsifiable concentrates comprise a convenient concentration of a pesticide composition dissolved in a carrier that is either a water miscible solvent or a mixture of water-immiscible organic solvent and emulsifiers. Useful organic solvents include aromatics, especially xylenes and petroleum fractions, especially the high-boiling naphthalenic and olefinic portions of petroleum such as heavy aromatic naphtha. Other organic solvents may also be used, such as the terpenic solvents including rosin derivatives, aliphatic ketones such as cyclohexanone, and complex alcohols such as 2-ethoxyethanol. Suitable emulsifiers for emulsifiable concentrates are chosen from conventional anionic and nonionic surfactants.

Aqueous suspensions comprise suspensions of water-insoluble pesticide compositions dispersed in an aqueous carrier. Suspensions are prepared by finely grinding the pesticide composition and vigorously mixing it into a carrier comprised of water and surfactants. Ingredients, such as inorganic salts and synthetic or natural gums, may also be added, to increase the density and viscosity of the aqueous carrier. It is often most effective to grind and mix the pesticide composition at the same time by preparing the aqueous mixture and homogenizing it in an implement such as a sand mill, ball mill, or piston-type homogenizer.

Pesticide compositions may also be applied as granular formulations that are particularly useful for applications to the soil. Granular formulations contain the pesticide composition dispersed in a carrier that comprises clay or a similar substance. Such formulations are usually prepared by dissolving the pesticide composition in a suitable solvent and applying it to a granular carrier which has been pre-formed to the appropriate particle size, in the range of from about 0.5 to 3 mm. Such formulations may also be formulated by making a dough or paste of the carrier and pesticide composition and crushing and drying to obtain the desired granular particle size.

Dusts containing a pesticide composition are prepared by intimately mixing the pesticide composition in powdered form with a suitable dusty agricultural carrier, such as kaolin clay, ground volcanic rock, and the like. Dusts can be applied as a seed dressing, or as a foliage application with a dust blower machine.

It is equally practical to apply a pesticide composition in the form of a solution in an appropriate organic solvent, usually petroleum oil, such as the spray oils, which are widely used in agricultural chemistry.

Pesticide compositions can also be applied in the form of an aerosol formulation. In such formulations, the pesticide composition is dissolved or dispersed in a carrier, which is a pressure-generating propellant mixture. The aerosol formulation is packaged in a container from which the mixture is dispensed through an atomizing valve.

Pesticide baits are formed when the pesticide composition is mixed with food or an attractant or both. When the pests eat the bait they also consume the pesticide composition. Baits may take the form of granules, gels, flowable powders, liquids, or solids. They may be used in or around pest harborages.

Fumigants are pesticides that have a relatively high vapor pressure and hence can exist as a gas in sufficient concentrations to kill pests in soil or enclosed spaces. The toxicity of the fumigant is proportional to its concentration and the exposure time. They are characterized by a good capacity for diffusion and act by penetrating the pest's respiratory system or being absorbed through the pest's cuticle. Fumigants are applied to control stored product pests under gas proof sheets, in gas sealed rooms or buildings or in special chambers.

Oil solution concentrates are made by dissolving a pesticide composition in a solvent that will hold the pesticide composition in solution. Oil solutions of a pesticide composition usually provide faster knockdown and kill of pests than other formulations due to the solvents themselves having pesticidal action and the dissolution of the waxy covering of the integument increasing the speed of uptake of the pesticide. Other advantages of oil solutions include better storage stability, better penetration of crevices, and better adhesion to greasy surfaces.

Another embodiment is an oil-in-water emulsion, wherein the emulsion comprises oily globules which are each provided with a lamellar liquid crystal coating and are dispersed in an aqueous phase, wherein each oily globule comprises at least one compound which is agriculturally active, and is individually coated with a monolamellar or oligolamellar layer comprising: (1) at least one non-ionic lipophilic surface-active agent, (2) at least one non-ionic hydrophilic surface-active agent and (3) at least one ionic surface-active agent, wherein the globules having a mean particle diameter of less than 800 nanometers. Further information on the embodiment is disclosed in U.S. patent publication 20070027034 published February 1, 2007, having Patent Application serial number 11/495,228. For ease of use this embodiment will be referred to as "OIWE".

For further information consult **"**INSECT PEST MANAGEMENT" 2nd Edition by D. Dent, copyright CAB International (2000). Additionally, for more detailed information consult **"**HANDBOOK OF PEST CONTROL - THE BEHAVIOR, LIFE HISTORY, AND CONTROL OF HOUSEHOLD PESTS" by Arnold Mallis, 9th Edition, copyright 2004 by GIE Media Inc.

### OTHER FORMULATION COMPONENTS

Generally, when the compositions disclosed in this document are used in a formulation, such formulation can also contain other components. These components include, but are not limited to, (this is a non-exhaustive and non-mutually exclusive list) wetters, spreaders, stickers, penetrants, buffers, sequestering agents, drift reduction agents, compatibility agents, anti-foam agents, cleaning agents, dispersants, rheology agents, biocides and emulsifiers. A few components are described forthwith.

A wetting agent is a substance that when added to a liquid increases the spreading or penetration power of the liquid by reducing the interfacial tension between the liquid and the surface on which it is spreading. Wetting agents are used for two main functions in agrochemical formulations: during processing and manufacture to increase the rate of wetting of powders in water to make concentrates for soluble liquids or suspension concentrates; and during mixing of a product with water in a spray tank to reduce the wetting time of wettable powders and to improve the penetration of water into water-dispersible granules. Examples of wetting agents used in wettable powder, suspension concentrate, and water-dispersible granule formulations are: sodium lauryl sulphate; sodium dioctyl sulphosuccinate; alkyl phenol ethoxylates; and aliphatic alcohol ethoxylates.

A dispersing agent is a substance which adsorbs onto the surface of particles and helps to preserve the state of dispersion of the particles and prevents them from reaggregating. Dispersing agents are added to agrochemical formulations to facilitate dispersion and suspension during manufacture, and to ensure the particles redisperse into water in a spray tank. They are widely used in wettable powders, suspension concentrates and water-dispersible granules. Surfactants that are used as dispersing agents have the ability to adsorb strongly onto a particle surface and provide a charged or steric barrier to reaggregation of particles. The most commonly used surfactants are anionic, non-ionic, or mixtures of the two types. For wettable powder formulations, the most common dispersing agents are sodium lignosulphonates. For suspension concentrates, very good adsorption and stabilization are obtained using polyelectrolytes, such as sodium naphthalene sulphonate formaldehyde condensates. Tristyrylphenol ethoxylate phosphate esters are also used. Non-ionics such as alkylarylethylene oxide condensates and EO-PO block copolymers are sometimes combined with anionics as dispersing agents for suspension concentrates. In recent years, new types of very high molecular weight polymeric surfactants have been developed as dispersing agents. These have very long hydrophobic 'backbones' and a large number of ethylene oxide chains forming the 'teeth' of a 'comb' surfactant. These high molecular weight polymers can give very good long-term stability to suspension concentrates because the hydrophobic backbones have many anchoring points onto the particle surfaces. Examples of dispersing agents used in agrochemical formulations are: sodium lignosulphonates; sodium naphthalene sulphonate formaldehyde condensates; tristyrylphenol ethoxylate phosphate esters; aliphatic alcohol ethoxylates; alky ethoxylates; EO-PO block copolymers; and graft copolymers.

An emulsifying agent is a substance which stabilizes a suspension of droplets of one liquid phase in another liquid phase. Without the emulsifying agent the two liquids would separate into two immiscible liquid phases. The most commonly used emulsifier blends contain alkylphenol or aliphatic alcohol with 12 or more ethylene oxide units and the oil-soluble calcium salt of dodecylbenzene sulphonic acid. A range of hydrophile-lipophile balance ("HLB") values from 8 to 18 will normally provide good stable emulsions. Emulsion stability can sometimes be improved by the addition of a small amount of an EO-PO block copolymer surfactant.

A solubilizing agent is a surfactant which will form micelles in water at concentrations above the critical micelle concentration. The micelles are then able to dissolve or solubilize water-insoluble materials inside the hydrophobic part of the micelle. The types of surfactants usually used for solubilization are non-ionics: sorbitan monooleates; sorbitan monooleate ethoxylates; and methyl oleate esters.

Surfactants are sometimes used, either alone or with other additives such as mineral or vegetable oils as adjuvants to spray-tank mixes to improve the biological performance of the pesticide on the target. The types of surfactants used for bioenhancement depend generally on the nature and mode of action of the pesticide. However, they are often non-ionics such as: alky ethoxylates; linear aliphatic alcohol ethoxylates; aliphatic amine ethoxylates.

Organic solvents are used mainly in the formulation of emulsifiable concentrates, ULV formulations, and to a lesser extent granular formulations. Sometimes mixtures of solvents are used. The first main groups of solvents are aliphatic paraffinic oils such as kerosene or refined paraffins. The second main group and the most common comprises the aromatic solvents such as xylene and higher molecular weight fractions of C9 and C10 aromatic solvents. Chlorinated hydrocarbons are useful as cosolvents to prevent crystallization of pesticides when the formulation is emulsified into water. Alcohols are sometimes used as cosolvents to increase solvent power.

Thickeners or gelling agents are used mainly in the formulation of suspension concentrates, emulsions and suspoemulsions to modify the rheology or flow properties of the liquid and to prevent separation and settling of the dispersed particles or droplets. Thickening, gelling, and anti-settling agents generally fall into two categories, namely water-insoluble particulates and water-soluble polymers. It is possible to produce suspension concentrate formulations using clays and silicas. Examples of these types of materials, include, but are limited to, montmorillonite, e.g. bentonite; magnesium aluminum silicate; and attapulgite. Water-soluble polysaccharides have been used as thickening-gelling agents for many years. The types of polysaccharides most commonly used are natural extracts of seeds and seaweeds are synthetic derivatives of cellulose. Examples of these types of materials include, but are not limited to, guar gum; locust bean gum; carrageenam; alginates; methyl cellulose; sodium carboxymethyl cellulose (SCMC); hydroxyethyl cellulose (HEC). Other types of anti-settling agents are based on modified starches, polyacrylates, polyvinyl alcohol and polyethylene oxide. Another good anti-settling agent is xanthan gum.

Microorganisms cause spoilage of formulated products. Therefore preservation agents are used to eliminate or reduce their effect. Examples of such agents include, but are not limited to: propionic acid and its sodium salt; sorbic acid and its sodium or potassium salts; benzoic acid and its sodium salt; p-hydroxy benzoic acid sodium salt; methyl p-hydroxy benzoate; and 1,2-benzisothiazalin-3-one (BIT).

The presence of surfactants, which lower interfacial tension, often causes water-based formulations to foam during mixing operations in production and in application through a spray tank. In order to reduce the tendency to foam, anti-foam agents are often added either during the production stage or before filling into bottles. Generally, there are two types of anti-foam agents, namely silicones and non-silicones. Silicones are usually aqueous emulsions of dimethyl polysiloxane while the non-silicone anti-foam agents are water-insoluble oils, such as octanol and nonanol, or silica. In both cases, the function of the anti-foam agent is to displace the surfactant from the air-water interface.

For further information see **"**CHEMISTRY AND TECHNOLOGY OF AGROCHEMICAL FORMULATIONS" edited by D.A. Knowles, copyright 1998 by Kluwer Academic Publishers. Also see **"**INSECTICIDES IN AGRICULTURE AND ENVIRONMENT - RETROSPECTS AND PROSPECTS" by A.S. Perry, I. Yamamoto, I. Ishaaya, and R. Perry, copyright 1998 by Springer-Verlag.

### APPLICATIONS

The actual amount of a pesticide composition to be applied to loci of pests is generally not critical and can readily be determined by those skilled in the art. In general, concentrations from about 0.01 grams of pesticide per hectare to about 5000 grams of pesticide per hectare are expected to provide good control.

The locus to which a pesticide composition is applied can be any locus inhabited by a pest, for example, vegetable crops, fruit and nut trees, grape vines, ornamental plants, domesticated animals, the interior or exterior surfaces of buildings, and the soil around buildings. Controlling pests generally means that pest populations, activity, or both, are reduced in a locus. This can come about when: pest populations are repulsed from a locus; when pests are incapacitated in or around a locus; or pests are exterminated, in whole or in part, in or around a locus. Of course a combination of these results can occur. Generally, pest populations, activity, or both are desirably reduced more than fifty percent, preferably more than 90 percent.

Generally, with baits, the baits are placed in the ground where, for example, termites can come into contact with the bait. Baits can also be applied to a surface of a building, (horizontal, vertical, or slanted, surface) where, for example, ants, termites, cockroaches, and flies, can come into contact with the bait.

Because of the unique ability of the eggs of some pests to resist pesticide compositions repeated applications may be desirable to control newly emerged larvae.

Systemic movement of pesticides in plants may be utilized to control pests on one portion of the plant by applying the pesticide composition to a different portion of the plant. For example, control of foliar-feeding insects can be controlled by drip irrigation or furrow application, or by treating the seed before planting. Seed treatment can be applied to all types of seeds, including those from which plants genetically transformed to express specialized traits will germinate. Representative examples include those expressing proteins toxic to invertebrate pests, such as *Bacillus thuringiensis* or other insecticidal toxins, those expressing herbicide resistance, such as "Roundup Ready" seed, or those with "stacked" foreign genes expressing insecticidal toxins, herbicide resistance, nutrition-enhancement or any other beneficial traits. Furthermore, such seed treatments with the invention disclosed in this document can further enhance the ability of a plant to better withstand stressful growing conditions. This results in a healthier, more vigorous plant, which can lead to higher yields at harvest time.

It should be readily apparent that the invention can be used with plants genetically transformed to express specialized traits, such as *Bacillus thuringiensis* or other insecticidal toxins, or those expressing herbicide resistance, or those with "stacked" foreign genes expressing insecticidal toxins, herbicide resistance, nutrition-enhancement or any other beneficial traits.

The invention disclosed in this document is suitable for controlling endoparasites and ectoparasites in the veterinary medicine sector or in the field of animal keeping. Compositions are applied in a known manner, such as by oral administration in the form of, for example, tablets, capsules, drinks, granules, by dermal application in the form of, for example, dipping, spraying, pouring on, spotting on, and dusting, and by parenteral administration in the form of, for example, an injection.

The invention disclosed in this document can also be employed advantageously in livestock keeping, for example, cattle, sheep, pigs, chickens, and geese. Suitable formulations are administered orally to the animals with the drinking water or feed. The dosages and formulations that are suitable depend on the species.

Before a pesticide composition can be used or sold commercially, such composition undergoes lengthy evaluation processes by various governmental authorities (local, regional, state, national, international). Voluminous data requirements are specified by regulatory authorities and must be addressed through data generation and submission by the product registrant or by another on the product registrant's behalf. These governmental authorities then review such data and if a determination of safety is concluded, provide the potential user or seller with product registration approval. Thereafter, in that locality where the product registration is granted and supported, such user or seller may use or sell such pesticide.

### EXAMPLES

The following examples are for illustration purposes and are not to be construed as limiting the invention disclosed in this document to only the embodiments disclosed in these examples.

### EXAMPLE COMPOSITIONS

Example compositions 1-70 described below each include spinetoram. Spinetoram is a mixture of 50-90% (2*R*,3a*R*,5a*R*,5b*S*,9*S*,13*S*,14*R*,16a*S*,16b*R*)-2-(6-deoxy-3-*O*-ethyl-2,4-di-*O*-methyl-α-L-mannopyranosyloxy)-13-[(2*R*,5*S*,6*R*)-5-(dimethylamino)tetrahydro-6-methylpyran-2-yloxy]-9-ethyl-2,3,3a,4,5,5a,5b,6,9,10,11,12,13,14,16a,16b-hexadecahydro-14-methyl-1*H-as-*indaceno[3,2-*d*]oxacyclododecine-7,15-dione and 50-10% (2*R*,3a*R*,5a*S,*5b*S,*9*S*,13*S*,14*R*,16a*S*,16b*S*)-2-(6-deoxy-3-*O-*ethyl-2,4-di*-O-*methyl*-*α-L-mannopyranosyloxy)-13-[(2*R*,5*S*,6*R*)-5-(dimethylamino)tetrahydro-6-methylpyran-2-yloxy]-9-ethyl-2,3,3a,5a,5b,6,9,10,11,12,13,14,16a,16b-tetradecahydro-4,14-dimethyl-1*H*-*as*-indaceno[3,2-*d*]oxacyclododecine-7,15-dione. Spinetoram is synthetically derived from a natural product and is typically accompanied by various impurities. Accordingly, for each of the compositions prepared below in Examples 1-70, an assay was performed on the spinetoram used to make the Examples to determine the presence of impurities.

For each assay, a calibration stock solution sample was prepared by adding approximately 43 mg of an analytically standard form of spinetoram with 10.0 mL of purified water into a 125 mL glass jar. The glass jar was gently swirled until the spinetoram was dispersed into the purified water. 100.0 mL of methanol was then added to the water/spinetoram mixture in the glass jar. A second solution was prepared by adding 10 mL of purified water and approximately 50 mg of the spinetoram product used in each of Examples 1-70 to a 125 mL glass jar. The glass jar was gently swirled until the spinetoram dispersed into the purified water. 100.0 mL of methanol was then added to the mixture. Each sample was then analyzed using liquid chromatography performed with the following instrumentation and under the following conditions:

| | |
|---|---|
| Chromatograph: | Agilent (formally Hewlett Packard) model 1100 or equivalent |
| Column: | Phenomenex Luna, C8(2) 3µm, 150 m x 4.6 mm column |
| Mobile Phase A: | water with 2 g/L ammonium acetate, pH adjusted to 5.5 with acetic acid |
| Mobile Phase B: | acetonitrile/methanol (80:20, v:v) |
| Isocratic elution: | 20% A / 80% B |
| | |
| Flow: | 1.0 mL/minute |
| Injection volume: | 10.0 µL |
| Detector: | UV @ 250 nm |
| Run Time: | 20 minutes |
| Integrator: | Agilent EZChrom Elite data acquisition system, or equivalent |

Based on the results of the liquid chromatography, the weight percentage of the pure spinetoram component of each of the spinetoram products used in Examples 1-70 was calculated. The weight percentage of impurities was then calculated by subtracting the weight percentage of the pure spinetoram component from 100. The weight percentage of spinetoram impurities in each of Examples 1-70, based from these calculations, is provided below.

### Example 1:

A liquid composition including spinetoram and zinc oxide, among other ingredients, was prepared according to the following. Spinetoram, Reax® 88A, a dispersant commercially available from MeadWestvaco Corporation, P.O. Box 118005, Charleston, SC 29423, Geropon® SDS, a surfactant commercially available from Rhodia, Inc., 8 Cedar Brook Drive, Cranbury, NJ 08512, Breakthru® AF 9903, an antifoaming agent commercially available from Evonik Industries AG, Rellinghauser Straße 1-11, Essen, Germany 45128, Proxel® GXL, a microbiostat solution commercially available from Arch Chemicals, Inc., 1955 Lake Park Drive, Suite 100, Smyrna, Georgia 30080, and a balance of water to provide a suspension concentrate having 25-50% w/w of spinetoram were mixed together. The resulting mixture was milled in an Eiger Mini Motormill media mill from Eiger Machinery, Inc., 888 East Belvidere Road, Grayslake, Illinois 60030, to a particle size of 1-10 µm (volume weighted mean diameter). The particle size was measured using a Malvern Mastersizer 2000 laser diffraction particle analyzer from Malvern Instruments Ltd., Enigma Business Park, Grovewood Road, Malvern, Worcestershire WR14 1XZ, United Kingdom. After milling, Nanox® 500, a zinc oxide product commercially available from Elementis Specialties, Inc., P.O. Box 700, 329 Wyckoffs Mill Road, Hightstown, NJ 08520, was added to the mixture under agitation. The total solids concentration of the mixture was adjusted in the range of 20-50% by weight by adding water. The mixture was then homogenized with a Silverson L4RT-A homogenizer from Silverson Machines Inc., 355 Chestnut St., East Longmeadow, MA 01028, for about 15-30 minutes. The weight percentages for the foregoing ingredients, calculated by comparing the weight of each respective ingredient relative to the total weight of the composition, are provided in Table 1. Table 1 also provides the weight percentage of spinetoram impurities in the composition based on the values determined by the assay procedure described above.

**Table 1**

| Example 1 | |
|---|---|
| **Ingredients** | **Wt**. **%** |
| Spinetoram | 3.1 |
| Spinetoram impurities | 0.63 |
| ZnO | 9.92 |
| Reax® 88A | 1.12 |
| Geropon® SDS | 0.22 |
| Breakthru® AF 9903 | 0.10 |
| Proxel® GXL | 0.10 |
| Water | 84.81 |

The liquid composition of Example 1 was later used for bio-efficacy experiments, but an assay was performed beforehand to determine its proportion by weight of pure spinetoram so appropriate concentrations for testing could be prepared. For this assay procedure, a calibration stock solution sample was prepared by adding approximately 43 mg of an analytically standard form of spinetoram with 10.0 mL of purified water into a 125 mL glass jar. The glass jar was gently swirled until the spinetoram was dispersed into the purified water. 100.0 mL of methanol was then added to the water/spinetoram mixture in the glass jar. A second solution was prepared by adding 10 mL of purified water and approximately 130 mg of the composition to a 125 mL glass jar. The glass jar was gently swirled until the composition dispersed into the purified water. 100.0 mL of methanol was then added to the mixture and the mixture was shaken for at least about 5 minutes on a mechanical shaker. An aliquot of the mixture was then filtered through a 0.45 µm nylon syringe filter, with the first few filtered drops being discarded, and the remaining filtrate providing a sample for liquid chromatography. Each sample was then analyzed using liquid chromatography performed with the following instrumentation and under the following conditions:

| | |
|---|---|
| Chromatograph: | Agilent (formally Hewlett Packard) model 1100 or equivalent |
| Column: | Phenomenex Luna, C8(2) 3µm, 150 m x 4.6 mm column |
| Mobile Phase A: | water with 2 g/L ammonium acetate, pH adjusted to 5.5 with acetic acid |
| Mobile Phase B: | acetonitrile/methanol (80:20, v:v) |
| Isocratic elution: | 20% A / 80% B |
| Flow: | 1.0 mL/minute |
| Injection volume: | 10.0 µL |
| Detector: | UV @ 250 nm |
| Run Time: | 20 minutes |
| Integrator: | Agilent EZChrom Elite data acquisition system, or equivalent |

Based on the results of the liquid chromatography, the weight percentage of the pure spinetoram component for the composition of Example 1 was calculated to be 3.1 %.

### Example 2:

A liquid composition including spinetoram and zinc oxide, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 500, a zinc oxide product, was added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the composition exclusive of water, are provided in Table 2. Table 2 also provides the weight percentage of spinetoram impurities in the composition based on the values determined by the assay procedure described above.

**Table 2**

| Example 2 | |
|---|---|
| **Ingredients** | **Wt**. **%** |
| Spinetoram | 10.0 |
| Spinetoram impurities | 1.47 |
| ZnO | 79.96 |
| Reax® 88A | 7.14 |
| Geropon® SDS | 1.43 |

The liquid composition was then spray-dried using a Buchi® Model 190 bench top spray dryer from Buchi Corporation, 19 Lukens Drive, Suite 400, New Castle, DE 19720, at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 2 apart from the water is believed to be volatile, it is contemplated that the solid composition includes weight percentages for each of the ingredients that substantially correspond to those provided in Table 2. However, since the solid composition was later used for bio-efficacy experiments, an assay was performed to determine its proportion by weight of pure spinetoram so appropriate concentrations for testing could be prepared.

For this assay procedure, a calibration stock solution sample was prepared by adding approximately 43 mg of an analytically standard form of spinetoram with 10.0 mL of purified water into a 125 mL glass jar. The glass jar was gently swirled until the spinetoram was dispersed into the purified water. 100.0 mL of methanol was then added to the water/spinetoram mixture in the glass jar. A second solution was prepared by adding 10 mL of purified water and approximately 130 mg of the solid composition to a 125 mL glass jar. The glass jar was gently swirled until the solid composition dispersed into the purified water. 100.0 mL of methanol was then added to the mixture and the mixture was shaken for at least about 5 minutes on a mechanical shaker. An aliquot of the mixture was then filtered through a 0.45 µm nylon syringe filter, with the first few filtered drops being discarded, and the remaining filtrate providing a sample for liquid chromatography. Each sample was then analyzed using liquid chromatography performed with the instrumentation and in accordance with the parameters set forth above in Example 1. Based on the results of the liquid chromatography, the weight percentage of the pure spinetoram component for the solid composition of Example 2 was calculated to be 13.0%.

### Example 3:

A liquid composition including spinetoram and iron (III) oxide, among other ingredients, was prepared according to the following. Spinetoram, Kraftsperse® 25M, a dispersant commercially available from MeadWestvaco Corporation, P.O. Box 118005, Charleston, SC 29423, Soprophor® 3D33, a surfactant commercially available from Rhodia, Inc., 8 Cedar Brook Drive, Cranbury, NJ 08512, Dow Corning® 200, an antifoaming agent commercially available from Dow Corning Corporation, P.O. Box 994, Midland, MI 48686, Proxel® GXL, Kelzan® xanthan gum commercially available from CP Kelco, 1000 Parkwood Circle, Suite 1000, Atlanta, GA 30339, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product commercially available from Magnetics International, Inc., Foster Plaza No. 7, 661 Andersen Drive, Pittsburgh, PA 15220, was added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 3. Table 3 also provides the weight percentage of spinetoram impurities in the composition based on the values determined by the assay procedure described above.

**Table 3**

| Example 3 | |
|---|---|
| **Ingredients** | **Wt**. **%** |
| Spinetoram | 20.28 |
| Spinetoram impurities | 3.3 |
| Fe₂O₃ | 20.28 |
| Kraftsperse® 25M | 5.09 |
| Soprophor® 3D33 | 1.32 |
| Dow Corning® 200 | 0.14 |
| Proxel® GXL | 0.08 |
| Xanthan Gum | 0.08 |
| Water | 49.43 |

The liquid composition of Example 3 was later used for bio-efficacy experiments, but an assay was performed beforehand to determine its proportion by weight of pure spinetoram so appropriate concentrations for testing could be prepared. The assay was performed according to the procedure described above with respect to Example 1 and the weight percentage of the pure spinetoram component for the liquid composition was calculated to be 19.8%.

### Example 4:

A liquid composition including spinetoram and iron (III) oxide, among other ingredients, was prepared according to the following. Spinetoram, Kraftsperse® 25M, Soprophor® 3D33, Soprophor® FL, a surfactant commercially available from Rhodia, Inc., 8 Cedar Brook Drive, Cranbury, NJ 08512, Proxel® GXL, xanthan gum and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, was added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 4. Table 4 also provides the weight percentage of spinetoram impurities in the liquid composition based on the values determined by the assay procedure described above.

**Table 4**

| Example 4 | |
|---|---|
| **Ingredients** | **Wt**. **%** |
| Spinetoram | 30.0 |
| Spinetoram impurities | 4.3 |
| Fe₂O₃ | 55.0 |
| Kraftsperse® 25M | 9.25 |
| Soprophor® 3D33 | 1.03 |
| Soprophor® FL | 0.4 |
| Proxel® GXL | 0.01 |
| Xanthan Gum | 0.01 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 4 apart from the water is believed to be volatile, it is contemplated that the solid composition includes weight percentages for each of the ingredients that substantially correspond to those provided in Table 4. The solid composition of Example 4 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 31.5%.

### Example 5:

A liquid composition including spinetoram, zinc oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 500, a zinc oxide product, and egg albumen from Grade II chicken egg whites from Sigma Aldrich Corporation, 3050 Spruce St., St. Louis, MO 63103, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the liquid composition, are provided in Table 5. Table 5 also provides the weight percentage of spinetoram impurities in the liquid composition based on the values determined by the assay procedure described above.

**Table 5**

| Example 5 | |
|---|---|
| **Ingredients** | **Wt**. **%** |
| Spinetoram | 3.11 |
| Spinetoram impurities | 0.64 |
| Egg Albumen | 15.86 |
| ZnO | 10.09 |
| Reax® 88A | 1.13 |
| Geropon® SDS | 0.23 |
| Water | 68.94 |

The liquid composition of Example 5 was later used for bio-efficacy experiments, but an assay was performed beforehand to determine its proportion by weight of pure spinetoram so appropriate concentrations for testing could be prepared. The assay was performed according to the procedure described above with respect to Example 1 and the weight percentage of the pure spinetoram component for the liquid composition was calculated to be 3.1 %.

### Example 6:

A liquid composition including spinetoram, zinc oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 500, a zinc oxide product, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 6. Table 6 also provides the weight percentage of spinetoram impurities in the liquid composition based on the values determined by the assay procedure described above.

**Table 6**

| Example 6 | |
|---|---|
| **Ingredients** | **Wt**. **%** |
| Spinetoram | 10.0 |
| Spinetoram impurities | 2.05 |
| Egg Albumen | 51.08 |
| ZnO | 32.5 |
| Reax® 88A | 3.64 |
| Geropon® SDS | 0.73 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 6 apart from the water is believed to be volatile, it is contemplated that the solid composition includes weight percentages for each of the ingredients that substantially correspond to those provided in Table 6. The solid composition of Example 6 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 11.4%.

### Example 7:

A liquid composition including spinetoram, zinc oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 7. Table 7 also provides the weight percentage of spinetoram impurities in the liquid composition based on the values determined by the assay procedure described above.

**Table 7**

| Example 7 | |
|---|---|
| **Ingredients** | **Wt**. **%** |
| Spinetoram | 10.0 |
| Spinetoram impurities | 1.47 |
| Egg Albumen | 25.03 |
| ZnO | 57.0 |
| Reax® 88A | 5.42 |
| Geropon® SDS | 1.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 7 apart from the water is believed to be volatile, it is contemplated that the solid composition includes weight percentages for each of the ingredients that substantially correspond to those provided in Table 7. The solid composition of Example 7 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 12.2%.

### Example 8:

A liquid composition including spinetoram, zinc oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 8. Table 8 also provides the weight percentage of spinetoram impurities in the liquid composition based on the values determined by the assay procedure described above.

**Table 8**

| Example 8 | |
|---|---|
| **Ingredients** | **Wt**. **%** |
| Spinetoram | 10.0 |
| Spinetoram impurities | 1.47 |
| Egg Albumen | 68.63 |
| ZnO | 17.0 |
| Reax® 88A | 2.42 |
| Geropon® SDS | 0.48 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 8 apart from the water is believed to be volatile, it is contemplated that the solid composition includes weight percentages for each of the ingredients that substantially correspond to those provided in Table 8. The solid composition of Example 8 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 10.2%.

### Example 9:

A liquid composition including spinetoram, zinc oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 9. Table 9 also provides the weight percentage of spinetoram impurities in the liquid composition based on the values determined by the assay procedure described above.

**Table 9**

| Example 9 | |
|---|---|
| **Ingredients** | **Wt**. **%** |
| Spinetoram | 25.0 |
| Spinetoram impurities | 3.67 |
| Egg Albumen | 40.09 |
| ZnO | 25.5 |
| Reax® 88A | 4.78 |
| Geropon® SDS | 0.96 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 9 apart from the water is believed to be volatile, it is contemplated that the solid composition includes weight percentages for each of the ingredients that substantially correspond to those provided in Table 9. The solid composition of Example 9 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 24.7%.

### Example 10:

A liquid composition including spinetoram, zinc oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 10. Table 10 also provides the weight percentage of spinetoram impurities in the liquid composition based on the values determined by the assay procedure described above.

**Table 10**

| Example 10 | |
|---|---|
| **Ingredients** | **Wt**. **%** |
| Spinetoram | 40.0 |
| Spinetoram impurities | 5.87 |
| Egg Albumen | 28.24 |
| ZnO | 18.7 |
| Reax® 88A | 5.99 |
| Geropon® SDS | 1.2 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 10 apart from the water is believed to be volatile, it is contemplated that the solid composition includes weight percentages for each of the ingredients that substantially correspond to those provided in Table 10. The solid composition of Example 10 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 41.5%.

### Example 11:

A liquid composition including spinetoram, titanium dioxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Ti-Pure® R105, a titanium dioxide product commercially available from DuPont Titanium Technologies, 1007 Market Street, Wilmington, DE 19898, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 11. Table 11 also provides the weight percentage of spinetoram impurities in the liquid composition based on the values determined by the assay procedure described above.

**Table 11**

| Example 11 | |
|---|---|
| **Ingredients** | **Wt. %** |
| Spinetoram | 10.0 |
| Spinetoram impurities | 1.47 |
| Egg Albumen | 50.53 |
| TiO₂ | 33.6 |
| Reax® 88A | 3.67 |
| Geropon® SDS | 0.73 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 11 apart from the water is believed to be volatile, it is contemplated that the solid composition includes weight percentages for each of the ingredients that substantially correspond to those provided in Table 11. The solid composition of Example 11 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 10.2%.

### Example 12:

A liquid composition including spinetoram, *cupric* oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, a cupric oxide nanopowder commercially available from Sigma Aldrich Corporation, 3050 Spruce St., St. Louis, MO 63103, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 12. Table 12 also provides the weight percentage of spinetoram impurities in the liquid composition based on the values determined by the assay procedure described above.

**Table 12**

| Example 12 | |
|---|---|
| **Ingredients** | **Wt**. **%** |
| Spinetoram | 10.0 |
| Spinetoram impurities | 1.47 |
| Egg Albumen | 50.53 |
| CuO | 33.6 |
| Reax® 88A | 3.67 |
| Geropon® SDS | 0.73 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 12 apart from the water is believed to be volatile, it is contemplated that the solid composition includes weight percentages for each of the ingredients that substantially correspond to those provided in Table 12. The solid composition of Example 12 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 11.4%.

### Example 13:

A liquid composition including spinetoram, iron (III) oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 13. Table 13 also provides the weight percentage of spinetoram impurities in the liquid composition based on the values determined by the assay procedure described above.

**Table 13**

| Example 13 | |
|---|---|
| **Ingredients** | **Wt**. **%** |
| Spinetoram | 10.0 |
| Spinetoram impurities | 1.47 |
| Egg Albumen | 52.27 |
| Fe₂O₃ | 32.0 |
| Reax® 88A | 3.55 |
| Geropon® SDS | 0.71 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 13 apart from the water is believed to be volatile, it is contemplated that the solid composition includes weight percentages for each of the ingredients that substantially correspond to those provided in Table 13. The solid composition of Example 13 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 10.6%.

### Example 14:

A liquid composition including spinetoram, iron (III) oxide and egg albumen, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and egg albumen from Grade II chicken egg whites from Sigma Aldrich Corporation were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 14. Table 14 also provides the weight percentage of spinetoram impurities in the liquid composition based on the values determined by the assay procedure described above.

**Table 14**

| Example 14 | |
|---|---|
| **Ingredients** | **Wt**. **%** |
| Spinetoram | 25.0 |
| Spinetoram impurities | 3.67 |
| Egg Albumen | 40.09 |
| Fe₂O₃ | 25.5 |
| Reax® 88A | 4.78 |
| Geropon® SDS | 0.96 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 14 apart from the water is believed to be volatile, it is contemplated that the solid composition includes weight percentages for each of the ingredients that substantially correspond to those provided in Table 14. The solid composition of Example 14 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 25.6%.

### Example 15:

A liquid composition including spinetoram, iron (III) oxide and egg albumen, among other ingredients, was prepared according to the following. Spinetoram, Reax® 88A, Geropon® SDS, Kraftsperse® 25M, Soprophor® FL and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 25% w/w aqueous solution of Primegg® Code 302 dried egg whites commercially available from Primera Foods, 612 South 8^{th} Street, P.O. Box 373, Cameron, WI 54822, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 15. Table 15 also provides the weight percentage of spinetoram impurities in the liquid composition based on the values determined by the assay procedure described above.

**Table 15**

| Example 15 | |
|---|---|
| **Ingredients** | **Wt. %** |
| Spinetoram | 30.0 |
| Spinetoram impurities | 3.27 |
| Primegg® | 28.03 |
| Fe₂O₃ | 30.0 |
| Reax® 88A | 4.0 |
| Geropon® SDS | 1.0 |
| Kraftsperse® 25M | 3.4 |
| Soprophor® FL | 0.3 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 15 apart from the water is believed to be volatile, it is contemplated that the solid composition includes weight percentages for each of the ingredients that substantially correspond to those provided in Table 15. The solid composition of Example 15 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 29.7%.

### Example 16:

A liquid composition including spinetoram, iron (III) oxide and egg albumen, among other ingredients, was prepared according to the following. Spinetoram, Reax® 88A, Geropon® SDS, Kraftsperse® 25M, Soprophor® FL and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 25% w/w aqueous solution of Primegg® Code 302 dried egg whites were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 16. Table 16 also provides the weight percentage of spinetoram impurities in the liquid composition based on the values determined by the assay procedure described above.

**Table 16**

| Example 16 | |
|---|---|
| **Ingredients** | **Wt. %** |
| Spinetoram | 29.42 |
| Spinetoram impurities | 3.21 |
| Primegg® | 9.82 |
| Fe₂O₃ | 49.03 |
| Reax® 88A | 3.92 |
| Geropon® SDS | 0.98 |
| Kraftsperse® 25M | 3.33 |
| Soprophor® FL | 0.29 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 16 apart from the water is believed to be volatile, it is contemplated that the solid composition includes weight percentages for each of the ingredients that substantially correspond to those provided in Table 16. The solid composition of Example 16 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 29.5%.

### Example 17:

A liquid composition including spinetoram, iron (III) oxide and egg albumen, among other ingredients, was prepared according to the following. Spinetoram, Kraftsperse® 25M, Soprophor® 3D33, Dow Corning® 200, Proxel® GXL, xantham gum and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 25% w/w aqueous solution of Primegg® Code 302 dried egg whites were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 17. Table 17 also provides the weight percentage of spinetoram impurities in the liquid composition based on the values determined by the assay procedure described above.

**Table 17**

| Example 17 | |
|---|---|
| **Ingredients** | **Wt. %** |
| Spinetoram | 33.0 |
| Spinetoram impurities | 5.37 |
| Primegg® | 24.0 |
| Fe₂O₃ | 30.23 |
| Kraftsperse® 25M | 6.0 |
| Soprophor® 3D33 | 1.1 |
| Dow Corning® 200 | 0.1 |
| Proxel® GXL | 0.1 |
| Xanthan Gum | 0.1 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 17 apart from the water is believed to be volatile, it is contemplated that the solid composition includes weight percentages for each of the ingredients that substantially correspond to those provided in Table 17. The solid composition of Example 17 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 33.5%.

### Example 18:

A liquid composition including spinetoram, iron (III) oxide and egg albumen, among other ingredients, was prepared according to the following. Spinetoram, Kraftsperse® 25M, Soprophor® FL and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 25% w/w aqueous solution of Primegg® Code 302 dried egg whites were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 18. Table 18 also provides the weight percentage of spinetoram impurities in the liquid composition based on the values determined by the assay procedure described above.

**Table 18**

| Example 18 | |
|---|---|
| **Ingredients** | **Wt. %** |
| Spinetoram | 37.5 |
| Spinetoram impurities | 4.7 |
| Primegg® | 25.64 |
| Fe₂O₃ | 21.4 |
| Kraftsperse® 25M | 9.76 |
| Soprophor® FL | 1.0 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 18 apart from the water is believed to be volatile, it is contemplated that the solid composition includes weight percentages for each of the ingredients that substantially correspond to those provided in Table 18. The solid composition of Example 18 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 37.3%.

### Example 19:

A liquid composition including spinetoram, iron (III) oxide and zein, among other ingredients, was prepared according to the following. Spinetoram, Kraftsperse® 25M, Soprophor® 3D33, xanthum gum, Proxel® GXL, Dow Corning® Antifoam B, an anitfoaming agent available from Dow Corning Corporation, P.O. Box 994, Midland, MI 48686, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and F4000, a zein product commercially available from Freeman Industries LLC, 106 Marbledale Road, Tuckahoe, New York 10707, were added to the mixture under agitation. The F4000 was added as a 9% w/w aqueous solution (the "zein solution") which was prepared by combining, with stirring, 90g of F4000 zein, 750 g of distilled water, and 100 g of concentrated aqueous ammonia (Fisher Scientific). A 50% NaOH solution was added to the zein solution in an amount sufficient to raise the pH above 11 and then additional water was added to bring the total final weight of the zein solution to 1000 g. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 19. Table 19 also provides the weight percentage of spinetoram impurities in the liquid composition based on the values determined by the assay procedure described above.

**Table 19**

| Example 19 | |
|---|---|
| **Ingredients** | **Wt. %** |
| Spinetoram | 24.97 |
| Spinetoram impurities | 4.06 |
| Fe₂O₃ | 24.97 |
| Zein | 37.45 |
| Kraftsperse® 25M | 4.32 |
| Soprophor® 3D33 | 3.84 |
| Xanthan Gum | 0.1 |
| Proxel® GXL | 0.1 |
| Dow Corning® Antifoam B | 0.19 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 19 apart from the water is believed to be volatile, it is contemplated that the solid composition includes weight percentages for each of the ingredients that substantially correspond to those provided in Table 19. The solid composition of Example 19 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 22.2%.

### Example 20:

A liquid composition including spinetoram, iron (III) oxide and zein, among other ingredients, was prepared according to the following. Spinetoram, Kraftsperse® 25M, Soprophor® 3D33, xanthum gum, Proxel® GXL, Dow Corning® Antifoam B and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and F4000, a zein product, were added to the mixture under agitation. The F4000 was added as a 9% w/w aqueous solution which was prepared as described above with respect to Example 19. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 20. Table 20 also provides the weight percentage of spinetoram impurities in the liquid composition based on the values determined by the assay procedure described above.

**Table 20**

| Example 20 | |
|---|---|
| **Ingredients** | **Wt. %** |
| Spinetoram | 32.14 |
| Spinetoram impurities | 5.23 |
| Fe₂O₃ | 29.23 |
| Zein | 22.41 |
| Kraftsperse® 25M | 5.56 |
| Soprophor® 3D33 | 4.94 |
| Xanthan Gum | 0.12 |
| Proxel® GXL | 0.12 |
| Dow Corning® Antifoam B | 0.25 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 20 apart from the water is believed to be volatile, it is contemplated that the solid composition includes weight percentages for each of the ingredients that substantially correspond to those provided in Table 20. The solid composition of Example 20 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 37.1 %.

### Example 21:

A liquid composition including spinetoram, iron (III) oxide and gelatin, among other ingredients, was prepared according to the following. Spinetoram, Kraftsperse® 25M, Soprophor® 3D33, xanthum gum, Proxel® GXL, Dow Corning® Antifoam B and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and ZA-100, a gelatine product commercially available from Eastman Gelatine, 227 Washington Street, Peabody, MA 01960, were added to the mixture under agitation. The ZA-100 was added as a 20% w/w aqueous solution. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 21. Table 21 also provides the weight percentage of spinetoram impurities in the liquid composition based on the values determined by the assay procedure described above.

**Table 21**

| Example 21 | |
|---|---|
| **Ingredients** | **Wt. %** |
| Spinetoram | 32.14 |
| Spinetoram impurities | 5.23 |
| Fe₂O₃ | 29.23 |
| Gelatin | 22.41 |
| Kraftsperse® 25M | 5.56 |
| Soprophor® 3D33 | 4.94 |
| Xanthan Gum | 0.12 |
| Proxel® GXL | 0.12 |
| Dow Corning® Antifoam B | 0.25 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 21 apart from the water is believed to be volatile, it is contemplated that the solid composition includes weight percentages for each of the ingredients that substantially correspond to those provided in Table 21. The solid composition of Example 21 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 42.7%.

### Example 22:

A liquid composition including spinetoram, iron (III) oxide and whey, among other ingredients, was prepared according to the following. Spinetoram, Kraftsperse® 25M, Soprophor® 3D33, xanthum gum, Proxel® GXL, Dow Corning® Antifoam B and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and W1500, which is spray-dried whey from bovine milk with protein ≥ 11% and is commercially available from Sigma-Aldrich Corporation, 3050 Spruce St., St. Louis, MO, 63103, were added to the mixture under agitation. The W1500 was added as a 30% w/w aqueous solution. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 22. Table 22 also provides the weight percentage of spinetoram impurities in the liquid composition based on the values determined by the assay procedure described above.

**Table 22**

| Example 22 | |
|---|---|
| **Ingredients** | **Wt**. **%** |
| Spinetoram | 32.14 |
| Spinetoram impurities | 5.23 |
| Fe₂O₃ | 29.23 |
| Whey | 22.41 |
| Kraftsperse® 25M | 5.56 |
| Soprophor® 3D33 | 4.94 |
| Xanthan Gum | 0.12 |
| Proxel® GXL | 0.12 |
| Dow Corning® Antifoam B | 0.25 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 22 apart from the water is believed to be volatile, it is contemplated that the solid composition includes weight percentages for each of the ingredients that substantially correspond to those provided in Table 22. The solid composition of Example 22 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 34.3%.

### Example 23:

A liquid composition including spinetoram, iron (III) oxide and cysteine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and cysteine, lot# 05024Jh from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 23. Table 23 also provides the weight percentage of spinetoram impurities in the liquid composition based on the values determined by the assay procedure described above.

**Table 23**

| Example 23 | |
|---|---|
| **Ingredients** | **Wt**. **%** |
| Spinetoram | 31.1 |
| Spinetoram impurities | 5.08 |
| Fe₂O₃ | 52.63 |
| Cysteine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 23 apart from the water is believed to be volatile, it is contemplated that the solid composition includes weight percentages for each of the ingredients that substantially correspond to those provided in Table 23. The solid composition of Example 23 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 28.8%.

### Example 24:

A liquid composition including spinetoram, iron (III) oxide and methionine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and methionine, lot# 058H0123 from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 24. Table 24 also provides the weight percentage of spinetoram impurities in the liquid composition based on the values determined by the assay procedure described above.

**Table 24**

| Example 24 | |
|---|---|
| **Ingredients** | **Wt**. **%** |
| Spinetoram | 31.1 |
| Spinetoram impurities | 5.08 |
| Fe₂O₃ | 52.63 |
| Methionine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 24 apart from the water is believed to be volatile, it is contemplated that the solid composition includes weight percentages for each of the ingredients that substantially correspond to those provided in Table 24. The solid composition of Example 24 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 35.7%.

### Example 25:

A liquid composition including spinetoram, iron (III) oxide and tryptophan, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and tryptophan, lot# 04925CJ from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in
Table 25. Table 25 also provides the weight percentage of spinetoram impurities in the liquid composition based on the values determined by the assay procedure described above.

**Table 25**

| Example 25 | |
|---|---|
| **Ingredients** | **Wt**. **%** |
| Spinetoram | 31.1 |
| Spinetoram impurities | 5.08 |
| Fe₂O₃ | 52.63 |
| Methionine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 25 apart from the water is believed to be volatile, it is contemplated that the solid composition includes weight percentages for each of the ingredients that substantially correspond to those provided in Table 25. The solid composition of Example 25 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 37.5%.

### Example 26:

A liquid composition including spinetoram, iron (III) oxide and arginine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and arginine, lot# 01396PH from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 26. Table 26 also provides the weight percentage of spinetoram impurities in the liquid composition based on the values determined by the assay procedure described above.

**Table 26**

| Example 26 | |
|---|---|
| **Ingredients** | **Wt**. **%** |
| Spinetoram | 31.1 |
| Spinetoram impurities | 5.08 |
| Fe₂O₃ | 52.63 |
| Arginine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 26 apart from the water is believed to be volatile, it is contemplated that the solid composition includes weight percentages for each of the ingredients that substantially correspond to those provided in Table 26. The solid composition of Example 26 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 30.2%.

### Example 27:

A liquid composition including spinetoram, iron (III) oxide and lysine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and lysine, lot# 106K2511 from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 27. Table 27 also provides the weight percentage of spinetoram impurities in the liquid composition based on the values determined by the assay procedure described above.

**Table 27**

| Example 27 | |
|---|---|
| **Ingredients** | **Wt**. **%** |
| Spinetoram | 31.1 |
| Spinetoram impurities | 5.08 |
| Fe₂O₃ | 52.63 |
| Lysine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 27 apart from the water is believed to be volatile, it is contemplated that the solid composition includes weight percentages for each of the ingredients that substantially correspond to those provided in Table 27. The solid composition of Example 27 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 33.6%.

### Example 28:

A liquid composition including spinetoram, iron (III) oxide and histidine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and histidine, lot# 117K0763 from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 28. Table 28 also provides the weight percentage of spinetoram impurities in the liquid composition based on the values determined by the assay procedure described above.

**Table 28**

| Example 28 | |
|---|---|
| **Ingredients** | **Wt**. **%** |
| Spinetoram | 31.1 |
| Spinetoram impurities | 5.08 |
| Fe₂O₃ | 52.63 |
| Histidine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 28 apart from the water is believed to be volatile, it is contemplated that the solid composition includes weight percentages for each of the ingredients that substantially correspond to those provided in Table 28. The solid composition of Example 28 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 31.4%.

### Example 29:

A liquid composition including spinetoram, iron (III) oxide and glutamine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and glutamine, lot# 018K0712 from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 29. Table 29 also provides the weight percentage of spinetoram impurities in the liquid composition based on the values determined by the assay procedure described above.

**Table 29**

| Example 29 | |
|---|---|
| **Ingredients** | **Wt**. **%** |
| Spinetoram | 31.1 |
| Spinetoram impurities | 5.08 |
| Fe₂O₃ | 52.63 |
| Glutamine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 29 apart from the water is believed to be volatile, it is contemplated that the solid composition includes weight percentages for each of the ingredients that substantially correspond to those provided in Table 29. The solid composition of Example 29 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 33.6%.

### Example 30:

A liquid composition including spinetoram, iron (III) oxide and glutamic acid, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and glutamic acid, lot# 117K0751 from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 30. Table 30 also provides the weight percentage of spinetoram impurities in the liquid composition based on the values determined by the assay procedure described above.

**Table 30**

| Example 30 | |
|---|---|
| **Ingredients** | **Wt**. **%** |
| Spinetoram | 31.1 |
| Spinetoram impurities | 5.08 |
| Fe₂O₃ | 52.63 |
| Glutamic acid | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 30 apart from the water is believed to be volatile, it is contemplated that the solid composition includes weight percentages for each of the ingredients that substantially correspond to those provided in Table 30. The solid composition of Example 30 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 29.9%.

### Example 31:

A liquid composition including spinetoram, iron (III) oxide and tyrosine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and tyrosine, lot# 101411818 from Sigma-Aldrich Corporation, were added to the mixture under agitation. The tyrosine was added as a 5% w/w aqueous solution that was prepared by adding appropriate amounts of tyrosine to water and adjusting the pH of the tyrosine/water mixture to 10.75. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 31. Table 31 also provides the weight percentage of spinetoram impurities in the liquid composition based on the values determined by the assay procedure described above.

**Table 31**

| Example 31 | |
|---|---|
| **Ingredients** | **Wt**. **%** |
| Spinetoram | 31.1 |
| Spinetoram impurities | 5.08 |
| Fe₂O₃ | 52.63 |
| Tyrosine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 31 apart from the water is believed to be volatile, it is contemplated that the solid composition includes weight percentages for each of the ingredients that substantially correspond to those provided in Table 31. The solid composition of Example 31 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 25.9%.

### Example 32:

A liquid composition including spinetoram, iron (III) oxide and cystine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and cystine, lot# 078K0081 from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 32. Table 32 also provides the weight percentage of spinetoram impurities in the composition based on the values determined by the assay procedure described above.

**Table 32**

| Example 32 | |
|---|---|
| **Ingredients** | **Wt**. **%** |
| Spinetoram | 10.0 |
| Spinetoram impurities | 1.63 |
| Fe₂O₃ | 11.0 |
| Cystine | 3.72 |
| Kraftsperse® 25M | 1.35 |
| Soprophor® 3D33 | 0.32 |
| Dow Corning® 200 | 0.03 |
| Proxel® GXL | 0.02 |
| Water | 71.93 |

The liquid composition of Example 32 was later used for bio-efficacy experiments. A test solution for the bio-efficacy experiments including an appropriate concentration of spinetoram was prepared based on the weight percentage of spinetoram provided in Table 32.

### Example 33:

A liquid composition including spinetoram, iron (III) oxide and cystine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and cystine, lot# 078K0081 from Sigma-Aldrich Corporation, were added to the mixture under agitation. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 33. Table 33 also provides the weight percentage of spinetoram impurities in the liquid composition based on the values determined by the assay procedure described above.

**Table 33**

| Example 33 | |
|---|---|
| **Ingredients** | **Wt**. **%** |
| Spinetoram | 31.1 |
| Spinetoram impurities | 5.08 |
| Fe₂O₃ | 52.63 |
| Cystine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 33 apart from the water is believed to be volatile, it is contemplated that the solid composition includes weight percentages for each of the ingredients that substantially correspond to those provided in Table 33. The solid composition of Example 33 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 32.5%.

### Example 34:

A liquid composition including spinetoram, iron (III) oxide and serine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and serine, lot# 077K0040 from Sigma-Aldrich Corporation, were added to the mixture under agitation. The serine was added as a 5% w/w aqueous solution prepared by adding appropriate amounts of serine to water and adjusting the pH of the serine/water mixture to 2.5. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 34. Table 34 also provides the weight percentage of spinetoram impurities in the liquid composition based on the values determined by the assay procedure described above.

**Table 34**

| Example 34 | |
|---|---|
| **Ingredients** | **Wt**. **%** |
| Spinetoram | 31.1 |
| Spinetoram impurities | 5.08 |
| Fe₂O₃ | 52.63 |
| Serine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 34 apart from the water is believed to be volatile, it is contemplated that the solid composition includes weight percentages for each of the ingredients that substantially correspond to those provided in Table 34. The solid composition of Example 34 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 34.1 %.

### Example 35:

A liquid composition including spinetoram, iron (III) oxide and asperigine, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and asperigine, lot# 058K5413 from Sigma-Aldrich Corporation, were added to the mixture under agitation. The asperigine was added as a 5% w/w aqueous solution prepared by adding appropriate amounts of asperigine to water and adjusting the pH of the asperigine/water mixture to 2.3. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 35. Table 35 also provides the weight percentage of spinetoram impurities in the liquid composition based on the values determined by the assay procedure described above.

**Table 35**

| Example 35 | |
|---|---|
| **Ingredients** | **Wt. %** |
| | |
| Spinetoram | 31.1 |
| Spinetoram impurities | 5.08 |
| Fe₂O₃ | 52.63 |
| Asperigine | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 35 apart from the water is believed to be volatile, it is contemplated that the solid composition includes weight percentages for each of the ingredients that substantially correspond to those provided in Table 35. The solid composition of Example 35 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 34.8%.

### Example 36:

A liquid composition including spinetoram, zinc oxide and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, and a 15% w/w aqueous solution of Celvol® 205 polyvinyl alcohol from Celanese Corporation, 1601 West LBJ Freeway, Dallas, Texas, 75234, were added to the mixture under agitation. The 15% w/w aqueous solution of Celvol® 205 polyvinyl alcohol was prepared by adding an appropriate amount of Celvol® 205 to water and then heating the Celvol® 205/water mixture at 90°C for one hour to enhance dissolution of the Celvol® 205. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 36. Table 36 also provides the weight percentage of spinetoram impurities in the liquid composition based on the values determined by the assay procedure described above.

**Table 36**

| Example 36 | |
|---|---|
| **Ingredients** | **Wt**. **%** |
| Spinetoram | 10.0 |
| Spinetoram impurities | 1.47 |
| ZnO | 33.0 |
| Celvol® 205 | 51.27 |
| Reax® 88A | 3.55 |
| Geropon® SDS | 0.71 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 36 apart from the water is believed to be volatile, it is contemplated that the solid composition includes weight percentages for each of the ingredients that substantially correspond to those provided in Table 36. The solid composition of Example 36 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 8.9%.

### Example 37:

A liquid composition including spinetoram, iron (III) oxide and polyvinyl alcohol, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 15% w/w aqueous solution of Celvol® 205 polyvinyl alcohol were added to the mixture under agitation. The 15% w/w aqueous solution of Celvol® 205 polyvinyl alcohol was prepared by adding an appropriate amount of Celvol® 205 to water and then heating the Celvol® 205/water mixture at 90°C for one hour to enhance dissolution of the Celvol® 205. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 37. Table 37 also provides the weight percentage of spinetoram impurities in the liquid composition based on the values determined by the assay procedure described above.

**Table 37**

| Example 37 | |
|---|---|
| **Ingredients** | **Wt**. **%** |
| Spinetoram | 31.1 |
| Spinetoram impurities | 5.08 |
| Fe₂O₃ | 52.63 |
| Celvol® 205 | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 37 apart from the water is believed to be volatile, it is contemplated that the solid composition includes weight percentages for each of the ingredients that substantially correspond to those provided in Table 37. The solid composition of Example 37 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 40.4%.

### Example 38:

A liquid composition including spinetoram, iron (III) oxide and a polyvinyl acetate product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 15% w/w aqueous solution of Erkol M 5/190 polyvinyl acetate with 80-85% hydrolysis commercially available from Celanese Corporation were added to the mixture under agitation. The 15% w/w aqueous solution of Erkol M 5/190 was prepared by adding an appropriate amount of Erkol M 5/190 to water and then heating the Erkol M 5/190 /water mixture at 90°C for one hour to enhance dissolution of the Erkol M 5/190. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 38. Table 38 also provides the weight percentage of spinetoram impurities in the liquid composition based on the values determined by the assay procedure described above.

**Table 38**

| Example 38 | |
|---|---|
| **Ingredients** | **Wt**. **%** |
| Spinetoram | 31.1 |
| Spinetoram impurities | 5.08 |
| Fe₂O₃ | 52.63 |
| Erkol M 5/190 | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 38 apart from the water is believed to be volatile, it is contemplated that the solid composition includes weight percentages for each of the ingredients that substantially correspond to those provided in Table 38. The solid composition of Example 38 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 35.5%.

### Example 39:

A liquid composition including spinetoram, iron (III) oxide and a polyvinyl acetate product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 15% w/w aqueous solution of Erkol M 5/290 polyvinyl acetate that has been 68-75% hydrolyzed and is commercially available from Celanese Corporation were added to the mixture under agitation. The 15% w/w aqueous solution of Erkol M 5/290 was prepared by adding appropriate amount of the Erkol M 5/190 to water. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 39. Table 39 also provides the weight percentage of spinetoram impurities in the liquid composition based on the values determined by the assay procedure described above.

**Table 39**

| Example 39 | |
|---|---|
| **Ingredients** | **Wt**. **%** |
| Spinetoram | 31.1 |
| Spinetoram impurities | 5.08 |
| Fe₂O₃ | 52.63 |
| Erkol M 5/290 | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 39 apart from the water is believed to be volatile, it is contemplated that the solid composition includes weight percentages for each of the ingredients that substantially correspond to those provided in Table 39. The solid composition of Example 39 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 35.6%.

### Example 40:

A liquid composition including spinetoram, iron (III) oxide and a polysaccharide product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Lyckeby Culinar AB Starch (lot# PU-92-001-0601636503) commercially available from Lyckeby Culinar AB, P.O. Box 45, SE-290 34 FJÄLKINGE, Sweden, were added to the mixture under agitation. The 5% w/w aqueous solution of Lyckeby Culinar AB Starch was prepared by adding appropriate amounts of the Lyckeby Culinar AB Starch to water and then heating to 90°C for 30 minutes to enhance dissolution of the Lyckeby Culinar AB Starch. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 40. Table 40 also provides the weight percentage of spinetoram impurities in the liquid composition based on the values determined by the assay procedure described above.

**Table 40**

| Example 40 | |
|---|---|
| **Ingredients** | **Wt**. **%** |
| Spinetoram | 31.1 |
| Spinetoram impurities | 5.08 |
| Fe₂O₃ | 52.63 |
| Lyckeby Culinar AB Starch | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 40 apart from the water is believed to be volatile, it is contemplated that the solid composition includes weight percentages for each of the ingredients that substantially correspond to those provided in Table 40. The solid composition of Example 40 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 33.9%.

### Example 41:

A liquid composition including spinetoram, iron (III) oxide and a polysaccharide product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 3% w/w aqueous solution of METHOCEL™ K4M (lot# UL08012N13) commercially available from Dow Chemical Company were added to the mixture under agitation. The 3% w/w aqueous solution of METHOCEL™ K4M was prepared by adding an appropriate amount of the METHOCEL™ K4M to water. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 41. Table 41 also provides the weight percentage of spinetoram impurities in the liquid composition based on the values determined by the assay procedure described above.

**Table 41**

| Example 41 | |
|---|---|
| **Ingredients** | **Wt**. **%** |
| Spinetoram | 31.1 |
| Spinetoram impurities | 5.08 |
| Fe₂O₃ | 52.63 |
| METHOCEL™ K4M | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 41 apart from the water is believed to be volatile, it is contemplated that the solid composition includes weight percentages for each of the ingredients that substantially correspond to those provided in Table 41. The solid composition of Example 41 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 33.0%.

### Example 42:

A liquid composition including spinetoram, iron (III) oxide and a polysaccharide product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w ethanol solution of Dermacryl starch (lot# KD-96802) commercially available from National Starch and Chemical Company, 10 Finderne Ave., Bridegewater, NJ 08807, were added to the mixture under agitation. The 5% w/w ethanol solution of Dermacryl starch was prepared by adding appropriate amounts of the Dermacryl starch to a 98% solution of ethanol. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 42. Table 42 also provides the weight percentage of spinetoram impurities in the liquid composition based on the values determined by the assay procedure described above.

**Table 42**

| Example 42 | |
|---|---|
| **Ingredients** | **Wt**. **%** |
| Spinetoram | 31.1 |
| Spinetoram impurities | 5.08 |
| Fe₂O₃ | 52.63 |
| Dermacryl starch | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 42 apart from the water is believed to be volatile, it is contemplated that the solid composition includes weight percentages for each of the ingredients that substantially correspond to those provided in Table 42. The solid composition of Example 42 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 35.3%.

### Example 43:

A liquid composition including spinetoram, iron (III) oxide and a polysaccharide product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of water-soluble starch (lot# 058K0157) commercially available from Sigma-Aldrich, Inc. were added to the mixture under agitation. The 5% w/w aqueous solution of water-soluble starch was prepared by adding appropriate amounts of the water-soluble starch to water and then heating to 90°C for 30 minutes to enhance dissolution of the water-soluble starch. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 43. Table 43 also provides the weight percentage of spinetoram impurities in the liquid composition based on the values determined by the assay procedure described above.

**Table 43**

| Example 43 | |
|---|---|
| **Ingredients** | **Wt. %** |
| Spinetoram | 31.1 |
| Spinetoram impurities | 5.08 |
| Fe₂O₃ | 52.63 |
| Water-soluble starch | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 43 apart from the water is believed to be volatile, it is contemplated that the solid composition includes weight percentages for each of the ingredients that substantially correspond to those provided in Table 43. The solid composition of Example 43 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 35.7%.

### Example 44:

A liquid composition including spinetoram, iron (III) oxide and a polysaccharide product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of potato starch (lot# 078K0674) commercially available from Sigma-Aldrich, Inc. were added to the mixture under agitation. The 5% w/w aqueous solution of potato starch was prepared by adding appropriate amounts of the potato starch to water and then heating to 90°C for 30 minutes to enhance dissolution of the potato starch. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 44. Table 44 also provides the weight percentage of spinetoram impurities in the liquid composition based on the values determined by the assay procedure described above.

**Table 44**

| Example 44 | |
|---|---|
| **Ingredients** | **Wt**. **%** |
| Spinetoram | 31.1 |
| Spinetoram impurities | 5.08 |
| Fe₂O₃ | 52.63 |
| Potato starch | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 44 apart from the water is believed to be volatile, it is contemplated that the solid composition includes weight percentages for each of the ingredients that substantially correspond to those provided in Table 44. The solid composition of Example 44 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 33.4%.

### Example 45:

A liquid composition including spinetoram, iron (III) oxide and a polysaccharide product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 4.3% w/w aqueous/glacial acetic acid solution of chitosan (lot# 61496MJ) commercially available from Sigma-Aldrich, Inc. were added to the mixture under agitation. The 4.3% w/w aqueous/glacial acetic acid solution of chitosan was prepared by adding appropriate amounts of chitosan to water followed by the addition of appropriate amounts of acetic acid to completely dissolve the chitosan. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 45. Table 45 also provides the weight percentage of spinetoram impurities in the composition based on the values determined by the assay procedure described above.

**Table 45**

| Example 45 | |
|---|---|
| **Ingredients** | **Wt**. **%** |
| Spinetoram | 10.0 |
| Spinetoram impurities | 1.63 |
| Fe₂O₃ | 11.0 |
| Chitosan | 3.72 |
| Kraftsperse® 25M | 1.35 |
| Soprophor® 3D33 | 0.32 |
| Dow Corning® 200 | 0.03 |
| Proxel® GXL | 0.02 |
| Water | 71.93 |

The liquid composition of Example 45 was later used for bio-efficacy experiments. A test solution for the bio-efficacy experiments including an appropriate concentration of spinetoram was prepared based on the weight percentage of spinetoram provided in Table 45.

### Example 46:

A liquid composition including spinetoram, iron (III) oxide and a polysaccharide product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 4.3% w/w aqueous/glacial acetic acid solution of chitosan (lot# 61496MJ) commercially available from Sigma-Aldrich, Inc. were added to the mixture under agitation. The 4.3% w/w aqueous/glacial acetic acid solution of chitosan was prepared by adding appropriate amounts of chitosan to water followed by the addition of appropriate amounts of acetic acid to completely dissolve the chitosan. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 46. Table 46 also provides the weight percentage of spinetoram impurities in the liquid composition based on the values determined by the assay procedure described above.

**Table 46**

| Example 46 | |
|---|---|
| **Ingredients** | **Wt**. **%** |
| Spinetoram | 31.1 |
| Spinetoram impurities | 5.08 |
| Fe₂O₃ | 52.63 |
| Chitosan | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 46 apart from the water is believed to be volatile, it is contemplated that the solid composition includes weight percentages for each of the ingredients that substantially correspond to those provided in Table 46. The solid composition of Example 46 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 27.9%.

### Example 47:

A liquid composition including spinetoram, iron (III) oxide and a latex product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 55% w/w aqueous solution of UCAR™ 379G latex (lot# UA045503N3-55.5) commercially available from Dow Chemical Company were added to the mixture under agitation. The 55% w/w aqueous solution of UCAR™ 379G was used as provided by the manufacturer. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 47. Table 47 also provides the weight percentage of spinetoram impurities in the composition based on the values determined by the assay procedure described above.

**Table 47**

| Example 47 | |
|---|---|
| **Ingredients** | **Wt**. **%** |
| Spinetoram | 10.0 |
| Spinetoram impurities | 1.63 |
| Fe₂O₃ | 11.0 |
| UCAR™ 379G | 3.72 |
| Kraftsperse® 25M | 1.35 |
| Soprophor® 3D33 | 0.32 |
| Dow Corning® 200 | 0.03 |
| Proxel® GXL | 0.02 |
| Water | 71.93 |

The liquid composition of Example 47 was later used for bio-efficacy experiments. A test solution for the bio-efficacy experiments including an appropriate concentration of spinetoram was prepared based on the weight percentage of spinetoram provided in Table 47.

### Example 48:

A liquid composition including spinetoram, iron (III) oxide and a latex product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 55% w/w aqueous solution of UCAR™ 379G latex (lot# UA045503N3-55.5) commercially available from Dow Chemical Company were added to the mixture under agitation. The 55% w/w aqueous solution of UCAR™ 379G was used as provided by the manufacturer. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 48. Table 48 also provides the weight percentage of spinetoram impurities in the liquid composition based on the values determined by the assay procedure described above.

**Table 48**

| Example 48 | |
|---|---|
| **Ingredients** | **Wt**. **%** |
| Spinetoram | 31.1 |
| Spinetoram impurities | 5.08 |
| Fe₂O₃ | 52.63 |
| UCAR™ 379G | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 48 apart from the water is believed to be volatile, it is contemplated that the solid composition includes weight percentages for each of the ingredients that substantially correspond to those provided in Table 48. The solid composition of Example 48 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 38.0%.

### Example 49:

A liquid composition including spinetoram, iron (III) oxide and a latex product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 55% w/w aqueous solution of UCAR™ 379G latex (lot# UA045503N3-55.5) commercially available from Dow Chemical Company were added to the mixture under agitation. The 55% w/w aqueous solution of UCAR™ 379G was used as provided by the manufacturer. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 49. Table 49 also provides the weight percentage of spinetoram impurities in the liquid composition based on the values determined by the assay procedure described above.

**Table 49**

| Example 49 | |
|---|---|
| **Ingredients** | **Wt**. **%** |
| Spinetoram | 31.1 |
| Spinetoram impurities | 5.08 |
| Fe₂O₃ | 47.92 |
| UCAR™ 379G | 9.42 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 49 apart from the water is believed to be volatile, it is contemplated that the solid composition includes weight percentages for each of the ingredients that substantially correspond to those provided in Table 49. The solid composition of Example 49 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 39.0%.

### Example 50:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 15% w/w aqueous solution of Agrimer 30, a polyvinyl pyrolidone homopolymer (lot# 3700172205) commercially available from International Specialty Products, Inc., 1361 Alps Road, Wayne, New Jersey 07470, were added to the mixture under agitation. The 15% w/w aqueous solution of Agrimer 30 was prepared by adding appropriate amounts of the Agrimer 30 to water. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 50. Table 50 also provides the weight percentage of spinetoram impurities in the liquid composition based on the values determined by the assay procedure described above.

**Table 50**

| Example 50 | |
|---|---|
| **Ingredients** | **Wt**. **%** |
| Spinetoram | 31.1 |
| Spinetoram impurities | 5.08 |
| Fe₂O₃ | 52.63 |
| Agrimer 30 | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 50 apart from the water is believed to be volatile, it is contemplated that the solid composition includes weight percentages for each of the ingredients that substantially correspond to those provided in Table 50. The solid composition of Example 50 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 36.3%.

### Example 51:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding appropriate amounts of Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 51. Table 51 also provides the weight percentage of spinetoram impurities in the composition based on the values determined by the assay procedure described above.

**Table 51**

| Example 51 | |
|---|---|
| **Ingredients** | **Wt**. **%** |
| Spinetoram | 7.18 |
| Spinetoram impurities | 1.17 |
| Fe₂O₃ | 12.15 |
| Agrimer VA 6 | 1.09 |
| Kraftsperse® 25M | 1.17 |
| Soprophor® 3D33 | 0.28 |
| Dow Corning® 200 | 0.03 |
| Proxel® GXL | 0.02 |
| Water | 76.91 |

The liquid composition of Example 51 was later used for bio-efficacy experiments, but an assay was performed beforehand to determine its proportion by weight of pure spinetoram so appropriate concentrations for testing could be prepared. The assay was performed according to the procedure described above with respect to Example 1 and the weight percentage of the pure spinetoram component for the liquid composition was calculated to be 6.2%.

### Example 52:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding appropriate amounts of the Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 52. Table 52 also provides the weight percentage of spinetoram impurities in the liquid composition based on the values determined by the assay procedure described above.

**Table 52**

| Example 52 | |
|---|---|
| **Ingredients** | **Wt. %** |
| Spinetoram | 31.1 |
| Spinetoram impurities | 5.08 |
| Fe₂O₃ | 52.63 |
| Agrimer VA 6 | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 52 apart from the water is believed to be volatile, it is contemplated that the solid composition includes weight percentages for each of the ingredients that substantially correspond to those provided in Table 52. The solid composition of Example 52 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 31.3%.

### Example 53:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding appropriate amounts of the Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 53. Table 53 also provides the weight percentage of spinetoram impurities in the composition based on the values determined by the assay procedure described above.

**Table 53**

| Example 53 | |
|---|---|
| **Ingredients** | **Wt. %** |
| | |
| Spinetoram | 10.0 |
| Spinetoram impurities | 1.63 |
| Fe₂O₃ | 11.0 |
| Agrimer VA 6 | 3.72 |
| Kraftsperse® 25M | 1.35 |
| Soprophor® 3D33 | 0.32 |
| Dow Corning® 200 | 0.03 |
| Proxel® GXL | 0.02 |
| Water | 71.93 |

The liquid composition of Example 53 was later used for bio-efficacy experiments. A test solution for the bio-efficacy experiments including an appropriate concentration of spinetoram was prepared based on the weight percentage of spinetoram provided in Table 53.

### Example 54:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding appropriate amounts of the Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 54. Table 54 also provides the weight percentage of spinetoram impurities in the composition based on the values determined by the assay procedure described above.

**Table 54**

| Example 54 | |
|---|---|
| **Ingredients** | **Wt**. **%** |
| Spinetoram | 5.0 |
| Spinetoram impurities | 0.82 |
| Fe₂O₃ | 16.0 |
| Agrimer VA 6 | 5.41 |
| Kraftsperse® 25M | 0.68 |
| Soprophor® 3D33 | 0.16 |
| Dow Corning® 200 | 0.02 |
| Proxel® GXL | 0.01 |
| Water | 71.9 |

The liquid composition of Example 54 was later used for bio-efficacy experiments. A test solution for the bio-efficacy experiments including an appropriate concentration of spinetoram was prepared based on the weight percentage of spinetoram provided in Table 54.

### Example 55:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding appropriate amounts of the Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 55. Table 55 also provides the weight percentage of spinetoram impurities in the composition based on the values determined by the assay procedure described above.

**Table 55**

| Example 55 | |
|---|---|
| **Ingredients** | **Wt. %** |
| Spinetoram | 2.5 |
| Spinetoram impurities | 0.41 |
| Fe₂O₃ | 18.4 |
| Agrimer VA 6 | 6.22 |
| Kraftsperse® 25M | 0.34 |
| Soprophor® 3D33 | 0.08 |
| Dow Corning® 200 | 0.01 |
| Proxel® GXL | 0.01 |
| Water | 72.03 |

The liquid composition of Example 55 was later used for bio-efficacy experiments. A test solution for the bio-efficacy experiments including an appropriate concentration of spinetoram was prepared based on the weight percentage of spinetoram provided in Table 55.

### Example 56:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding an appropriate amount of the Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for the foregoing ingredients, calculated by comparing the weight of each respective ingredient relative to the total weight of the composition, are provided in Table 56. Table 56 also provides the weight percentage of spinetoram impurities in the composition based on the values determined by the assay procedure described above.

**Table 56**

| Example 56 | |
|---|---|
| **Ingredients** | **Wt. %** |
| Spinetoram | 15.0 |
| Spinetoram impurities | 2.45 |
| Fe₂O₃ | 6.42 |
| Agrimer VA 6 | 2.17 |
| Kraftsperse® 25M | 2.03 |
| Soprophor® 3D33 | 0.48 |
| Dow Corning® 200 | 0.06 |
| Proxel® GXL | 0.03 |
| Water | 71.36 |

The liquid composition of Example 56 was later used for bio-efficacy experiments. A test solution for the bio-efficacy experiments including an appropriate concentration of spinetoram was prepared based on the weight percentage of spinetoram provided in Table 56.

### Example 57:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding an appropriate amount of the Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 57. Table 57 also provides the weight percentage of spinetoram impurities in the liquid composition based on the values determined by the assay procedure described above.

**Table 57**

| Example 57 | |
|---|---|
| **Ingredients** | **Wt. %** |
| Spinetoram | 31.1 |
| Spinetoram impurities | 5.08 |
| Fe₂O₃ | 54.99 |
| Agrimer VA 6 | 2.36 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 57 apart from the water is believed to be volatile, it is contemplated that the solid composition includes weight percentages for each of the ingredients that substantially correspond to those provided in Table 57. The solid composition of Example 57 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 32.99%.

### Example 58:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 5% w/w aqueous solution of Agrimer VA 6, a vinyl pyrolidone/vinylacetate co-polymer at a 4:6 ratio, (lot# 5600168453) commercially available from International Specialty Products, Inc., were added to the mixture under agitation. The 5% w/w aqueous solution of Agrimer VA 6 was prepared by adding an appropriate amount the Agrimer VA 6 to water. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 58. Table 58 also provides the weight percentage of spinetoram impurities in the liquid composition based on the values determined by the assay procedure described above.

**Table 58**

| Example 58 | |
|---|---|
| **Ingredients** | **Wt. %** |
| Spinetoram | 31.1 |
| Spinetoram impurities | 5.08 |
| Fe₂O₃ | 47.92 |
| Agrimer VA 6 | 9.42 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 58 apart from the water is believed to be volatile, it is contemplated that the solid composition includes weight percentages for each of the ingredients that substantially correspond to those provided in Table 58. The solid composition of Example 58 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 31.81 %.

### Example 59:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 50% w/w ethanol solution of Agrimer VA 3E, a vinyl pyrolidone/vinylacetate co-polymer at a 3:7 ratio, (lot# 5700182778) commercially available from International Specialty Products, Inc., were added to the mixture under agitation. The 50% w/w ethanol solution of Agrimer VA 3E was used as provided by the manufacturer. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 59. Table 59 also provides the weight percentage of spinetoram impurities in the liquid composition based on the values determined by the assay procedure described above.

**Table 59**

| Example 59 | |
|---|---|
| **Ingredients** | **Wt**. **%** |
| Spinetoram | 31.1 |
| Spinetoram impurities | 5.08 |
| Fe₂O₃ | 52.63 |
| Agrimer VA 3E | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 59 apart from the water is believed to be volatile, it is contemplated that the solid composition includes weight percentages for each of the ingredients that substantially correspond to those provided in Table 59. The solid composition of Example 59 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 37.42%.

### Example 60:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 50% w/w isoproponal solution of Agrimer VA 3I, a vinyl pyrolidone/vinylacetate co-polymer at a 3:7 ratio, (lot# 5700174579) commercially available from International Specialty Products, Inc., were added to the mixture under agitation. The 50% w/w isoproponal solution of Agrimer VA 3I was used as provided by the manufacturer. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 60. Table 60 also provides the weight percentage of spinetoram impurities in the liquid composition based on the values determined by the assay procedure described above.

**Table 60**

| Example 60 | |
|---|---|
| **Ingredients** | **Wt**. **%** |
| Spinetoram | 31.1 |
| Spinetoram impurities | 5.08 |
| Fe₂O₃ | 52.63 |
| Agrimer VA 3I | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 60 apart from the water is believed to be volatile, it is contemplated that the solid composition includes weight percentages for each of the ingredients that substantially correspond to those provided in Table 60. The solid composition of Example 60 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 38.33%.

### Example 61:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 50% w/w ethanol solution of Agrimer VA 7E, a vinyl pyrolidone/vinylacetate co-polymer at a 7:3 ratio, (lot# 5600171580) commercially available from International Specialty Products, Inc., were added to the mixture under agitation. The 50% w/w ethanol solution of Agrimer VA 7E was used as provided by the manufacturer. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 61. Table 61 also provides the weight percentage of spinetoram impurities in the liquid composition based on the values determined by the assay procedure described above.

**Table 61**

| Example 61 | |
|---|---|
| **Ingredients** | **Wt**. **%** |
| Spinetoram | 31.1 |
| Spinetoram impurities | 5.08 |
| Fe₂O₃ | 52.63 |
| Agrimer VA 7E | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 61 apart from the water is believed to be volatile, it is contemplated that the solid composition includes weight percentages for each of the ingredients that substantially correspond to those provided in Table 61. The solid composition of Example 61 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 33.39%.

### Example 62:

A liquid composition including spinetoram, iron (III) oxide and a polyvinyl pyrolidone product, among other ingredients, was prepared according to the following. Spinetoram, Kraftsperse® 25M, Soprophor® 3D33, Dow Corning® 200, Proxel® GXL, and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, 500M, an iron (III) oxide product, and a 50% w/w isopropanol solution of Agrimer VA 7I, a vinyl pyrolidone/vinylacetate co-polymer at a 7:3 ratio, (lot# 5700173643) commercially available from International Specialty Products, Inc., were added to the mixture under agitation. The 50% w/w isopropanol solution of Agrimer VA 7I was used as provided by the manufacturer. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 62. Table 62 also provides the weight percentage of spinetoram impurities in the liquid composition based on the values determined by the assay procedure described above.

**Table 62**

| Example 62 | |
|---|---|
| **Ingredients** | **Wt**. **%** |
| Spinetoram | 31.1 |
| Spinetoram impurities | 5.08 |
| Fe₂O₃ | 52.63 |
| Agrimer VA 7I | 4.71 |
| Kraftsperse® 25M | 5.06 |
| Soprophor® 3D33 | 1.2 |
| Dow Corning® 200 | 0.14 |
| Proxel® GXL | 0.08 |

The liquid composition was then spray-dried using a Buchi® Model 190 bench top spray dryer from Buchi Corporation at about a 300-400 ml/hr feed rate, 4-6 bar nozzle pressure, 115-170° C inlet temperature and 50-100° C outlet temperature to provide a solid composition. It is believed that the spray drying process removes all or substantially all of the water and other volatile ingredients from the liquid composition as it is converted to a solid composition. Since none of the ingredients in Example 62 apart from the water is believed to be volatile, it is contemplated that the solid composition includes weight percentages for each of the ingredients that substantially correspond to those provided in Table 62. The solid composition of Example 62 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 34.12%.

### Example 63:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 63. Table 63 also provides the weight percentage of spinetoram impurities in the liquid composition based on the values determined by the assay procedure described above.

**Table 63**

| Example 63 | |
|---|---|
| **Ingredients** | **Wt**. **%** |
| Spinetoram | 10.0 |
| Spinetoram impurities | 1.47 |
| Egg Albumen | 50.03 |
| ZnO | 17.0 |
| Celvol® 205 | 18.6 |
| Reax® 88A | 2.42 |
| Geropon® SDS | 0.48 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 63 apart from the water is believed to be volatile, it is contemplated that the solid composition includes weight percentages for each of the ingredients that substantially correspond to those provided in Table 63. The solid composition of Example 63 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 9.8%.

### Example 64:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 polyvinyl alcohol were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 64. Table 64 also provides the weight percentage of spinetoram impurities in the liquid composition based on the values determined by the assay procedure described above.

**Table 64**

| Example 64 | |
|---|---|
| **Ingredients** | **Wt**. **%** |
| Spinetoram | 10.0 |
| Spinetoram impurities | 1.47 |
| Egg Albumen | 29.06 |
| ZnO | 26.6 |
| Celvol® 205 | 29.1 |
| Reax® 88A | 3.14 |
| Geropon® SDS | 0.63 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 64 apart from the water is believed to be volatile, it is contemplated that the solid composition includes weight percentages for each of the ingredients that substantially correspond to those provided in Table 64. The solid composition of Example 64 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 9.6%.

### Example 65:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm

(volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 polyvinyl alcohol were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 65. Table 65 also provides the weight percentage of spinetoram impurities in the liquid composition based on the values determined by the assay procedure described above.

**Table 65**

| Example 65 | |
|---|---|
| **Ingredients** | **Wt**. **%** |
| Spinetoram | 10.0 |
| Spinetoram impurities | 1.47 |
| Egg Albumen | 26.47 |
| ZnO | 39.98 |
| Celvol® 205 | 17.1 |
| Reax® 88A | 4.15 |
| Geropon® SDS | 0.83 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 65 apart from the water is believed to be volatile, it is contemplated that the solid composition includes weight percentages for each of the ingredients that substantially correspond to those provided in Table 65. The solid composition of Example 65 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 11.4%.

### Example 66:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 polyvinyl alcohol were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 66. Table 66 also provides the weight percentage of spinetoram impurities in the liquid composition based on the values determined by the assay procedure described above.

**Table 66**

| Example 66 | |
|---|---|
| **Ingredients** | **Wt**. **%** |
| Spinetoram | 10.0 |
| Spinetoram impurities | 1.47 |
| Egg Albumen | 26.14 |
| ZnO | 15.99 |
| Celvol® 205 | 43.58 |
| Reax® 88A | 2.35 |
| Geropon® SDS | 0.47 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 66 apart from the water is believed to be volatile, it is contemplated that the solid composition includes weight percentages for each of the ingredients that substantially correspond to those provided in Table 66. The solid composition of Example 66 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 9.4%.

### Example 67:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 polyvinyl alcohol were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 67. Table 67 also provides the weight percentage of spinetoram impurities in the liquid composition based on the values determined by the assay procedure described above.

**Table 67**

| Example 67 | |
|---|---|
| **Ingredients** | **Wt**. **%** |
| Spinetoram | 10.0 |
| Spinetoram impurities | 1.47 |
| Egg Albumen | 8.71 |
| ZnO | 16.0 |
| Celvol® 205 | 61.0 |
| Reax® 88A | 2.35 |
| Geropon® SDS | 0.47 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 67 apart from the water is believed to be volatile, it is contemplated that the solid composition includes weight percentages for each of the ingredients that substantially correspond to those provided in Table 67. The solid composition of Example 67 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 9.0%.

### Example 68:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 polyvinyl alcohol were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 68. Table 68 also provides the weight percentage of spinetoram impurities in the liquid composition based on the values determined by the assay procedure described above.

**Table 68**

| Example 68 | |
|---|---|
| **Ingredients** | **Wt. %** |
| Spinetoram | 10.0 |
| Spinetoram impurities | 1.47 |
| Egg Albumen | 8.72 |
| ZnO | 55.97 |
| Celvol® 205 | 17.43 |
| Reax® 88A | 5.34 |
| Geropon® SDS | 1.07 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 68 apart from the water is believed to be volatile, it is contemplated that the solid composition includes weight percentages for each of the ingredients that substantially correspond to those provided in Table 68. The solid composition of Example 68 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 10.9%.

### Example 69:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 polyvinyl alcohol were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 69. Table 69 also provides the weight percentage of spinetoram impurities in the liquid composition based on the values determined by the assay procedure described above.

**Table 69**

| Example 69 | |
|---|---|
| **Ingredients** | **Wt. %** |
| Spinetoram | 10.0 |
| Spinetoram impurities | 1.47 |
| Egg Albumen | 8.71 |
| ZnO | 39.98 |
| Celvol® 205 | 34.86 |
| Reax® 88A | 4.15 |
| Geropon® SDS | 0.83 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 69 apart from the water is believed to be volatile, it is contemplated that the solid composition includes weight percentages for each of the ingredients that substantially correspond to those provided in Table 69. The solid composition of Example 69 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 10.5%.

### Example 70:

A liquid composition including spinetoram, zinc oxide, egg albumen and polyvinyl alcohol, among other ingredients, was prepared according to the following. Spinetoram, Reax® 88A, Geropon® SDS and a balance of water to provide a suspension concentrate having 25-50% w/w of spinetoram were mixed together. The resulting mixture was milled in an Eiger Mini Motormill media mill to a particle size of 1-10 µm (volume weighted mean diameter). The particle size was measured using a Malvern Mastersizer 2000 laser diffraction particle analyzer. After milling, Nanox® 200, a zinc oxide product, egg albumen from Grade II chicken egg whites from Sigma Aldrich Corporation and a 15% w/w aqueous solution of Celvol® 205 polyvinyl alcohol were added to the mixture under agitation. The 15% w/w aqueous solution of Celvol® 205 polyvinyl alcohol was prepared according to manufacturer instructions. The total solids concentration of the mixture was adjusted in the range of 20-50% by weight by adding water. The mixture was then homogenized with a Silverson L4RT-A homogenizer for about 15-30 minutes. The weight percentages for each of the foregoing ingredients, based on the total weight of the liquid composition exclusive of water, are provided in Table 70. Table 70 also provides the weight percentage of spinetoram impurities in the liquid composition based on the values determined by the assay procedure described above.

**Table 70**

| Example 70 | |
|---|---|
| **Ingredients** | **Wt. %** |
| Spinetoram | 20.0 |
| Spinetoram impurities | 2.94 |
| Egg Albumen | 24.76 |
| ZnO | 22.73 |
| Celvol® 205 | 24.77 |
| Reax® 88A | 4.0 |
| Geropon® SDS | 0.8 |

The liquid composition was then spray-dried using a Buchi® Model 190 bench top spray dryer from Buchi Corporation at about a 300-400 ml/hr feed rate, 4-6 bar nozzle pressure, 115-140° C inlet temperature and 50-100° C outlet temperature to provide a solid composition. It is believed that the spray drying process removes all or substantially all of the water and other volatile ingredients from the liquid composition as it is converted to the solid composition. Since none of the ingredients in Example 70 apart from the water is believed to be volatile, it is contemplated that the solid composition includes weight percentages for each of the ingredients that substantially correspond to those provided in Table 70. The solid composition of Example 70 was later used for bio-efficacy experiments, but an assay was performed beforehand to determine its proportion by weight of pure spinetoram so appropriate concentrations for testing could be prepared. The assay was performed according to the procedure described above with respect to Example 2 and the weight percentage of the pure spinetoram component for the solid composition was calculated to be 19.6%.

### BIO-EFFICACY TESTING

Biological efficacy experiments in Examples I-XXII were conducted according to the following parameters. A spinetoram control solution was prepared utilizing either Radiant®, a suspension concentrate formulation of spinetoram, or Delegate®, a water-dispersible granule formulation of spinetoram, in water to obtain a spinetoram concentration in solution of 125 ppm. Radiant® and Delegate® are commercially available from Dow AgroSciences LLC, 9330 Zionsville Road, Indianapolis, IN, 46268. Test solutions were also prepared utilizing Examples 1, 3, 5, 32, 45, 47, 51 and 53-56 and the solid compositions of Examples 2, 4, 6-31, 33-44, 46, 48-50, 52 and 57-70 (collectively the Example 1-70 solutions) in water to obtain a spinetoram concentration in each solution of 125 ppm. These solutions, plus a water-only control, were applied to potted pepper plants (*Capsicum annuum*) using a Mandel track sprayer calibrated to deliver the equivalent of 200 L/Ha of spray. Treated plants were allowed to dry and then were aged outdoors in natural sunlight or under a set of lamps emitting ultraviolet light at levels comparable to natural sunlight. At the appropriate time after treatment, i.e., at 4, 7 and 10; 4, 7 and 11; 4, 7, 11 and 14; 5, 9 and 13; 7, 9 and 14; 5, 7 and 12; or 5 and 10 days after treatment, 2.5 cm diameter disks were cut from treated leaves. One leaf disk was placed in each well of a 32 well plastic tray, which also contained a thin layer of agar to provide moisture. There were 8 replicate disks per treatment. Each well was infested with three second instar beet armyworm (*Spodoptera exigua*) larvae, and the well was sealed with plastic film. Larvae were held in an environmental chamber at 25°C/40 percent relative humidity. At 48 hours after infestation, the larvae were graded for mortality. A larva was considered dead if it could not move after being prodded, and the percent mortality (percent control) was calculated.

For each of Examples I-XXII, Table 71 below provides the percent control of the insect associated with the spinetoram control solution relative to an untreated standard. For Example 1-70 solutions, Table 71 provides the improvement in percent control relative to the spinetoram control solution (i.e., (percent control by Example 1-70 solutions) - (percent control by spinetoram control solution)). Table 71 also provides the average improvement (rounded to the nearest whole number) over the spinetoram control solution which was calculated by summing the individual improvements for each of the days relative to the control and then dividing by the number of measurements. For Examples I-III, the spinetoram control solution included Radiant®, and for Examples IV-XXII, the spinetoram control solution included Delegate®.

**Table 71**

| **Example Composition** | **3 DAT** | **4 DAT** | **5 DAT** | **6 DAT** | **7 DAT** | **9 DAT** | **10 DAT** | **11 DAT** | **12 DAT** | **13 DAT** | **14 DAT** | **Average Improvement** |
|---|---|---|---|---|---|---|---|---|---|---|---|---|
| | | | | | | | | | | | | |

| **Example I** | | | | | | | | | | | | |
|---|---|---|---|---|---|---|---|---|---|---|---|---|
| **Spinetoram Control Solution** | -- | 33 | -- | -- | 8 | -- | 4 | -- | -- | -- | -- | |
| **Example 1 Solution** | -- | 21 | -- | -- | -4 | -- | -4 | -- | -- | -- | -- | 4 |
| | | | | | | | | | | | | |

| **Example II** | | | | | | | | | | | | |
|---|---|---|---|---|---|---|---|---|---|---|---|---|
| **Spinetoram Control Solution** | -- | 88 | -- | -- | 25 | -- | 8 | -- | -- | -- | -- | |
| **Example 2 Solution** | -- | 0 | -- | -- | 33 | -- | 46 | -- | -- | -- | -- | 26 |
| **Example 5 Solution** | -- | 8 | -- | -- | 33 | -- | 17 | -- | -- | -- | -- | 19 |
| **Example 6 Solution** | -- | 4 | -- | -- | 58 | -- | 58 | -- | -- | -- | -- | 40 |
| **Example 7 Solution** | -- | 12 | -- | -- | 50 | -- | 25 | -- | -- | -- | -- | 29 |
| **Example 8 Solution** | -- | 12 | -- | -- | 38 | -- | 8 | -- | -- | -- | -- | 19 |
| | | | | | | | | | | | | |

| **Example III** | | | | | | | | | | | | |
|---|---|---|---|---|---|---|---|---|---|---|---|---|
| **Spinetoram Control Solution** | -- | 67 | -- | -- | 33 | -- | -- | 25 | -- | -- | -- | |
| **Example 63 Solution** | -- | 29 | -- | -- | 17 | -- | -- | 17 | -- | -- | -- | 21 |
| **Example 65 Solution** | -- | 29 | -- | -- | 42 | -- | -- | 33 | -- | -- | -- | 35 |
| **Example 66 Solution** | -- | 25 | -- | -- | 42 | -- | -- | -4 | -- | -- | -- | 21 |
| | | | | | | | | | | | | |

| **Example IV** | | | | | | | | | | | | |
|---|---|---|---|---|---|---|---|---|---|---|---|---|
| **Spinetoram Control Solution** | -- | 88 | -- | -- | 13 | -- | -- | 17 | -- | -- | -- | |
| **Example 64 Solution** | -- | 13 | -- | -- | 58 | -- | -- | 17 | -- | -- | -- | 29 |
| **Example 67 Solution** | -- | -4 | -- | -- | 33 | -- | -- | 29 | -- | -- | -- | 19 |
| | | | | | | | | | | | | |

| **Example V** | | | | | | | | | | | | |
|---|---|---|---|---|---|---|---|---|---|---|---|---|
| **Spinetoram Control Solution** | -- | 92 | -- | -- | 21 | -- | -- | 17 | -- | -- | -- | |
| **Example 70 Solution** | -- | 0 | -- | -- | 29 | -- | -- | 25 | -- | -- | -- | 18 |
| | | | | | | | | | | | | |

| **Example VI** | | | | | | | | | | | | |
|---|---|---|---|---|---|---|---|---|---|---|---|---|
| **Spinetoram Control Solution** | -- | 92 | -- | -- | 67 | -- | -- | 33 | -- | -- | -- | |
| **Example 68 Solution** | -- | 8 | -- | -- | 4 | -- | -- | 29 | -- | -- | -- | 14 |
| **Example 69 Solution** | -- | 0 | -- | -- | 17 | -- | -- | 42 | -- | -- | -- | 19 |
| **Example 36 Solution** | -- | 8 | -- | -- | 13 | -- | -- | 8 | -- | -- | -- | 10 |
| | | | | | | | | | | | | |

| **Example VII** | | | | | | | | | | | | |
|---|---|---|---|---|---|---|---|---|---|---|---|---|
| **Spinetoram Control Solution** | -- | 88 | -- | -- | 50 | -- | -- | 21 | -- | -- | 17 | |
| **Example 10 Solution** | -- | -4 | -- | -- | 25 | -- | -- | 29 | -- | -- | 21 | 18 |
| **Example 11 Solution** | -- | 8 | -- | -- | 17 | -- | -- | 4 | -- | -- | 4 | 8 |
| **Example 12 Solution** | -- | 4 | -- | -- | 33 | -- | -- | 50 | -- | -- | 50 | 34 |
| | | | | | | | | | | | | |

| **Example VIII** | | | | | | | | | | | | |
|---|---|---|---|---|---|---|---|---|---|---|---|---|
| **Spinetoram Control Solution** | -- | -- | 75 | -- | -- | 58 | -- | -- | -- | 21 | -- | |
| **Example 9 Solution** | -- | -- | 4 | -- | -- | 17 | -- | -- | -- | 50 | -- | 24 |
| **Example 13 Solution** | -- | -- | 25 | -- | -- | 29 | -- | -- | -- | 58 | -- | 38 |
| | | | | | | | | | | | | |

| **Example IX** | | | | | | | | | | | | |
|---|---|---|---|---|---|---|---|---|---|---|---|---|
| **Spinetoram Control Solution** | -- | -- | 96 | -- | -- | 79 | -- | -- | -- | 33 | -- | |
| **Example 15 Solution** | -- | -- | 0 | -- | -- | 8 | -- | -- | -- | 46 | -- | 18 |
| **Example 16 Solution** | -- | -- | 4 | -- | -- | 13 | -- | -- | -- | 50 | -- | 22 |
| | | | | | | | | | | | | |

| **Example X** | | | | | | | | | | | | |
|---|---|---|---|---|---|---|---|---|---|---|---|---|
| **Spinetoram Control Solution** | -- | -- | 79 | -- | -- | 42 | -- | -- | -- | 8 | -- | |
| **Example 18 Solution** | -- | -- | 13 | -- | -- | 25 | -- | -- | -- | 42 | -- | 26 |
| | | | | | | | | | | | | |

| **Example XI** | | | | | | | | | | | | |
|---|---|---|---|---|---|---|---|---|---|---|---|---|
| **Spinetoram Control Solution** | -- | -- | 67 | -- | -- | 46 | -- | -- | -- | 25 | -- | |
| **Example 4 Solution** | -- | -- | 29 | -- | -- | 42 | -- | -- | -- | 50 | -- | 40 |
| | | | | | | | | | | | | |

| **Example XII** | | | | | | | | | | | | |
|---|---|---|---|---|---|---|---|---|---|---|---|---|
| **Spinetoram Control Solution** | -- | -- | -- | -- | 71 | 38 | -- | -- | -- | -- | 4 | |
| **Example 3 Solution** | -- | -- | -- | -- | 4 | 13 | -- | -- | -- | -- | 38 | 18 |
| **Example 14 Solution** | -- | -- | -- | -- | 21 | 33 | -- | -- | -- | -- | 46 | 33 |
| **Example 17 Solution** | -- | -- | -- | -- | 25 | 46 | -- | -- | -- | -- | 54 | 42 |
| | | | | | | | | | | | | |

| **Example XIII** | | | | | | | | | | | | |
|---|---|---|---|---|---|---|---|---|---|---|---|---|
| **Spinetoram Control Solution** | -- | -- | 92 | -- | 83 | -- | -- | -- | 67 | -- | -- | |
| **Example 19 Solution** | -- | -- | 4 | -- | 4 | -- | -- | -- | 13 | -- | -- | 7 |
| | | | | | | | | | | | | |

| **Example XIII Continued** | | | | | | | | | | | | |
|---|---|---|---|---|---|---|---|---|---|---|---|---|
| **Example 20 Solution** | -- | -- | 8 | -- | 17 | -- | -- | -- | 29 | -- | -- | 18 |
| **Example 21 Solution** | -- | -- | 8 | -- | 8 | -- | -- | -- | 21 | -- | -- | 13 |
| **Example 22 Solution** | -- | -- | 8 | -- | 13 | -- | -- | -- | 25 | -- | -- | 15 |
| | | | | | | | | | | | | |

| **Example XIV** | | | | | | | | | | | | |
|---|---|---|---|---|---|---|---|---|---|---|---|---|
| **Spinetoram Control Solution** | -- | -- | 92 | -- | -- | | 13 | | -- | | -- | |
| **Example 37 Solution** | | | -4 | | | | -9 | | | | | -7 |
| **Example 38 Solution** | | | -13 | | | | 33 | | | | | 10 |
| | | | | | | | | | | | | |

| **Example XV** | | | | | | | | | | | | |
|---|---|---|---|---|---|---|---|---|---|---|---|---|
| **Spinetoram Control Solution** | -- | -- | 83 | -- | -- | | 13 | | -- | -- | -- | |
| **Example 39 Solution** | | | 13 | | | | 41 | | | | | 27 |
| **Example 48 Solution** | | | 5 | | | | 45 | | | | | 25 |
| **Example 49 Solution** | | | 5 | | | | 25 | | | | | 15 |
| **Example 50 Solution** | | | -4 | | | | 45 | | | | | 21 |
| | | | | | | | | | | | | |

| **Example XVI** | | | | | | | | | | | | |
|---|---|---|---|---|---|---|---|---|---|---|---|---|
| **Spinetoram Control Solution** | | | 83 | | | | 0 | | | | | |
| **Example 23 Solution** | | | 9 | | | | 50 | | | | | 30 |
| **Example 24 Solution** | | | 17 | | | | 71 | | | | | 44 |
| | | | | | | | | | | | | |

| **Example XVI Continued** | | | | | | | | | | | | |
|---|---|---|---|---|---|---|---|---|---|---|---|---|
| **Example 25 Solution** | | | 9 | | | | 71 | | | | | 40 |
| **Example 40 Solution** | | | 9 | | | | 79 | | | | | 44 |
| **Example 41 Solution** | | | 9 | | | | 67 | | | | | 38 |
| **Example 42 Solution** | | | -8 | | | | 50 | | | | | 21 |
| | | | | | | | | | | | | |

| **Example XVII** | | | | | | | | | | | | |
|---|---|---|---|---|---|---|---|---|---|---|---|---|
| **Spinetoram Control Solution** | | | 83 | | | | 13 | | | | | |
| **Example 26 Solution** | | | 9 | | | | 50 | | | | | 30 |
| **Example 27 Solution** | | | 17 | | | | 70 | | | | | 44 |
| **Example 28 Solution** | | | 17 | | | | 75 | | | | | 46 |
| **Example 29 Solution** | | | 5 | | | | 66 | | | | | 36 |
| **Example 30 Solution** | | | 13 | | | | 37 | | | | | 25 |
| **Example 43 Solution** | | | 17 | | | | 58 | | | | | 38 |
| **Example 44 Solution** | | | -4 | | | | 58 | | | | | 27 |
| | | | | | | | | | | | | |

| **Example XIX** | | | | | | | | | | | | |
|---|---|---|---|---|---|---|---|---|---|---|---|---|
| **Spinetoram Control Solution** | | | 75 | | | | 8 | | | | | |
| **Example 31 Solution** | | | -4 | | | | 50 | | | | | 23 |
| **Example 33 Solution** | | | 17 | | | | 67 | | | | | 42 |
| **Example 34 Solution** | | | 17 | | | | 80 | | | | | 49 |
| | | | | | | | | | | | | |

| **Example XIX Continued** | | | | | | | | | | | | |
|---|---|---|---|---|---|---|---|---|---|---|---|---|
| **Example 35 Solution** | | | 21 | | | | 80 | | | | | 51 |
| **Example 46 Solution** | | | 21 | | | | 75 | | | | | 48 |
| **Example 52 Solution** | | | 25 | | | | 88 | | | | | 57 |
| | | | | | | | | | | | | |

| **Example XX** | | | | | | | | | | | | |
|---|---|---|---|---|---|---|---|---|---|---|---|---|
| **Spinetoram Control Solution** | | | 67 | | | | 8 | | | | | |
| **Example 59 Solution** | | | 12 | | | | 59 | | | | | 36 |
| **Example 60 Solution** | | | 12 | | | | 13 | | | | | 13 |
| **Example 61 Solution** | | | 33 | | | | 38 | | | | | 36 |
| **Example 62 Solution** | | | 29 | | | | 50 | | | | | 40 |
| | | | | | | | | | | | | |

| **Example XXI** | | | | | | | | | | | | |
|---|---|---|---|---|---|---|---|---|---|---|---|---|
| **Spinetoram Control Solution** | | | 58 | | | | 17 | | | | | |
| **Example 51 Solution** | | | 21 | | | | 21 | | | | | 21 |
| **Example 57 Solution** | | | 42 | | | | 58 | | | | | 50 |
| **Example 58 Solution** | | | 42 | | | | 67 | | | | | 55 |
| | | | | | | | | | | | | |

| **Example XXII** | | | | | | | | | | | | |
|---|---|---|---|---|---|---|---|---|---|---|---|---|
| **Spinetoram Control Solution** | | | 50 | | | | 25 | | | | | |
| | | | | | | | | | | | | |

| **Example XXII Continued** | | | | | | | | | | | | |
|---|---|---|---|---|---|---|---|---|---|---|---|---|
| **Example 32 Solution** | | | 21 | | | | 29 | | | | | 25 |
| **Example 45 Solution** | | | 38 | | | | 42 | | | | | 40 |
| **Example 47 Solution** | | | 25 | | | | 38 | | | | | 31 |
| **Example 53 Solution** | | | 0 | | | | 8 | | | | | 4 |
| **Example 54 Solution** | | | 8 | | | | 25 | | | | | 17 |
| **Example 55 Solution** | | | 8 | | | | 21 | | | | | 15 |
| **Example 56 Solution** | | | 8 | | | | 17 | | | | | 13 |

### The headings in this document are for convenience only and must not be used to interpret any portion thereof.

Any theory, mechanism of operation, proof, or finding stated herein is meant to further enhance understanding of the present invention and is not intended to make the present invention in any way dependent upon such theory, mechanism of operation, proof, or finding. It should be understood that while the use of the word preferable, preferably or preferred in the description above indicates that the feature so described may be more desirable, it nonetheless may not be necessary and embodiments lacking the same may be contemplated as within the scope of the invention, that scope being defined by the claims that follow. In reading the claims it is intended that when words such as "a," "an," "at least one," "at least a portion" are used there is no intention to limit the claim to only one item unless specifically stated to the contrary in the claim. Further, when the language "at least a portion" and/or "a portion" is used the item may include a portion and/or the entire item unless specifically stated to the contrary. While the invention has been illustrated and described in detail in the drawings and foregoing description, the same is to be considered as illustrative and not restrictive in character, it being understood that only the selected embodiments have been shown and described and that all changes, modifications and equivalents that come within the spirit of the invention as defined herein or by any of the following claims are desired to be protected.

The invention will be further described with reference to the following aspects.
Aspect 1. A composition, comprising at least one macrocyclic lactone insecticide and at least one metal oxide, wherein the composition exhibits enhanced pesticidal activity levels compared to a composition dissimilar only in not having the at least one metal oxide.
Aspect 2. The composition of aspect 1, wherein the at least one macrocyclic lactone insecticide is a spinosyn selected from the group consisting of spinetoram and spinosad. Aspect 3. The composition of aspect 1, which includes at least about 1% by weight of the at least one macrocyclic lactone insecticide and from about 2% to about 90% by weight of the at least one metal oxide.
Aspect 4. The composition of aspect 1, further comprising at least one proteinaceous material including at least one member selected from the group consisting of an amino acid, bovine serum albumin, egg albumin, whey, gelatin and zein.
Aspect 5. The composition of aspect 4, which includes at least about 2% by weight of the at least one macrocyclic lactone insecticide, from about 5% to about 75% by weight of the at least one metal oxide and from about 2% to about 80% by weight of the at least one proteinaceous material.
Aspect 6. The composition of aspect 4, wherein the at least one proteinaceous material is an amino acid selected from the group consisting of cysteine, methionine, trytophan, histidine, tyrosine, arginine, lysine, glutamine, glutamic acid, cystine, serine and asperigine.
Aspect 7. The composition of aspect 1 or 4, further comprising at least one polymeric material including at least one member selected from the group consisting of polyvinyl alcohol, a polyvinyl alcohol derivative, polyvinyl pyrrolidone, a polyvinyl pyrrolidone derivative, a latex, a terpene polymer, a polysaccharide, a polysaccharide derivative, polyvinyl acetate, and a polyvinyl acetate derivative.
Aspect 8. The composition of aspect 7, which includes at least about 1% by weight of the at least one macrocyclic lactone insecticide, from about 5% to about 75% by weight of the at least one metal oxide and from about 3% to about 75% by weight of the at least one polymeric material.
Aspect 9. The composition of any of aspects 1-8, wherein the at least one metal oxide is selected from the group consisting of a zinc oxide, an iron oxide, a titanium oxide, a copper oxide, a manganese oxide and mixtures thereof.
Aspect 10. A composition, comprising at least one pesticide and iron oxide, wherein the composition exhibits enhanced pesticidal activity levels compared to a composition dissimilar only in not having the iron oxide.
Aspect 11. The composition of aspect 10, wherein the iron oxide is *ferric* oxide. Aspect 12. The composition of aspect 10, wherein the at least one pesticide is selected from the group consisting of spinetoram and spinosad.
Aspect 13. A composition, comprising:
   from about 5% to about 35% by weight of spinetoram;
   from about 5% to about 60% by weight of *ferric* oxide; and
   from about 2% to about 12% by weight of a polymeric material, wherein the polymeric material includes polyvinyl pyrrolidone.
Aspect 14. The composition of aspect 13, which includes:
   a ratio by weight between *ferric* oxide and spinetoram between about 1:2 and about 8:1;
   a ratio by weight between the polymeric material and spinetoram between about 1:8 and about 4:1; and
   a ratio by weight between the polymeric material and *ferric* oxide between about 1:10 and about 2:1.
Aspect 15. A method of controlling insects which comprises applying to a locus where control is desired an insect-inactivating amount of a composition according to any one of aspects 1 to 14.

## Claims

1. A composition, comprising at least one macrocyclic lactone insecticide, at least one metal oxide, and at least one of a polymeric material and a proteinaceous material, wherein the metal of the metal oxide is selected from the group consisting of zinc, iron, titanium, and copper, the at least one proteinaceous material includes at least one member selected from the group consisting of an amino acid, bovine serum albumin, egg albumen, whey, gelatin and zein, and the at least one polymeric material includes at least one member selected from the group consisting of polyvinyl alcohol, a polyvinyl alcohol derivative, polyvinyl pyrrolidone, a polyvinyl pyrrolidone derivative, a latex, a terpene polymer, a polysaccharide, a polysaccharide derivative polyvinyl acetate, and a polyvinyl acetate derivative.

2. The composition of claim 1, wherein the at least one macrocyclic lactone insecticide is a spinosyn selected from the group consisting of spinetoram and spinosad.

3. The composition of claim 1, which includes at least about 2% by weight of the at least one macrocyclic lactone insecticide, from about 5% to about 75% by weight of the at least one metal oxide and from about 2% to about 80% by weight of the at least one proteinaceous material.

4. The composition of claim 1, wherein the at least one proteinaceous material is an amino acid selected from the group consisting of cysteine, methionine, tryptophan, histidine, tyrosine, arginine, lysine, glutamine, glutamic acid, cystine, serine and asparagine.

5. The composition of claim 1, which includes at least about 1% by weight of the at least one macrocyclic lactone insecticide, from about 5% to about 75% by weight of the at least one metal oxide and from about 3% to about 75%by weight of the at least one polymeric material.

6. A composition according to claim 1 comprising:
from 5% to 35% by weight of spinetoram;
from 5% to 60% by weight of ferric oxide; and
from 2% to 12% by weight of a polymeric material, wherein the polymeric material includes polyvinyl pyrrolidone and the weight percentages are based on the total weight of the composition exclusive of water.

7. A method of controlling insects which comprises applying to a locus where control is desired an insect-inactivating amount of a composition according to one of claims 1-6.

8. A method, comprising spray drying a liquid composition according to claim 1 to provide a solid composition.

9. A method, comprising spray drying a liquid composition to provide a solid composition, wherein the liquid composition includes at least one macrocyclic lactone insecticide, at least one metal oxide selected from the group consisting of zinc oxide and ferric oxide, and at least one of a proteinaceous material and a polymeric material, wherein the proteinaceous material includes at least one member selected from the group consisting of an amino acid, bovine serum albumin, egg albumen, whey, gelatin and zein, and the polymeric material including at least one member selected from the group consisting of polyvinyl alcohol, a polyvinyl alcohol derivative, polyvinyl pyrrolidone, a polyvinyl pyrrolidone derivative, a latex, a terpene polymer, a polysaccharide, a polysaccharide derivative, polyvinyl acetate, and a polyvinyl acetate derivative.
